(19) Europäisches Patentamt
European Patent Office
Office européen des brevets

(11) **EP 3 040 141 B1**

(12) **EUROPEAN PATENT SPECIFICATION**

(45) Date of publication and mention
of the grant of the patent:
**24.07.2019 Bulletin 2019/30**

(21) Application number: **14840651.5**

(22) Date of filing: **25.08.2014**

(51) Int Cl.:
*B22F 5/00* (2006.01)     *B22F 1/00* (2006.01)
*C22C 9/01* (2006.01)     *F04D 5/00* (2006.01)
*F04D 29/046* (2006.01)     *F16C 33/12* (2006.01)
*F16C 33/14* (2006.01)     *F16C 33/10* (2006.01)
*B22F 3/11* (2006.01)     *B22F 3/10* (2006.01)
*B22F 3/16* (2006.01)     *B22F 5/10* (2006.01)
*C22C 1/04* (2006.01)     *C22C 1/08* (2006.01)
*F04D 29/047* (2006.01)     *B22F 3/24* (2006.01)

(86) International application number:
**PCT/JP2014/072098**

(87) International publication number:
**WO 2015/029922 (05.03.2015 Gazette 2015/09)**

(54) **SINTERED BEARING FOR FUEL PUMP AND METHOD FOR MANUFACTURING SAME**

GESINTERTES LAGER FÜR KRAFTSTOFFPUMPE UND VERFAHREN ZUR HERSTELLUNG DAVON

PALIER FRITTÉ POUR POMPE À CARBURANT ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2013 JP 2013175508**
**02.05.2014 JP 2014095113**
**20.08.2014 JP 2014167532**

(43) Date of publication of application:
**06.07.2016 Bulletin 2016/27**

(73) Proprietor: **NTN Corporation**
**Osaka-shi, Osaka 550-0003 (JP)**

(72) Inventors:
• **ITO, Yoshinori**
**Ama-gun**
**Aichi 497-8541 (JP)**

• **NAGATA, Hiroharu**
**Ama-gun**
**Aichi 497-8541 (JP)**
• **OHASHI, Yuta**
**Ama-gun**
**Aichi 497-8541 (JP)**
• **SETO, Tomoyuki**
**Kuwana-shi**
**Mie 511-8678 (JP)**

(74) Representative: **Eder Schieschke & Partner mbB**
**Patentanwälte**
**Elisabethstraße 34**
**80796 München (DE)**

(56) References cited:
EP-A1- 2 826 876     JP-A- S 643 322
JP-A- H02 173 224     JP-A- S56 152 902
JP-A- 2006 258 185     JP-A- 2013 023 732

**Description**

TECHNICAL FIELD

The present invention relates to a sintered bearing for a fuel pump that is excellent in corrosion resistance and abrasion resistance and has high strength, and to a method of manufacturing the sintered bearing.

BACKGROUND ART

Hitherto, for example, in an engine using gasoline or light oil as fuel, an electric fuel pump has been used. In recent years, engines including an electric fuel pump using fuel such as gasoline or light oil have been widely used in various places in the world. Gasoline, light oil, and the like of a variety of quality have been used in various regions in the world, and gasoline of inferior quality has been used in many regions. As one kind of gasoline of inferior quality, gasoline containing an organic acid and biofuel are known. In the case of using a copper-based sintered bearing in an electric fuel pump, the copper-based sintered bearing is corroded with the biofuel and the organic acid contained in such gasoline of inferior quality. This corrosion occurs on the periphery of an opening of a pore that is opened on a bearing surface and an inner surface of the pore, and further occurs on an inner surface of a pore that is present inside the bearing and communicates to the inside from the surface, for example. This degrades the strength of the bearing, with the result that the life of the copper-based sintered bearing becomes shorter.

Further, in recent years, engines for automobiles and the like are being miniaturized and reduced in weight actively. Along with this, there is also a demand for miniaturization and reduction in weight of fuel pumps, and sintered bearings to be incorporated in the fuel pumps are also required to be compact. For example, in order to miniaturize an electric fuel pump while ensuring discharge performance thereof, it is necessary to increase the number of rotations. Along with this, fuel such as gasoline introduced into a fuel pump passes through a flow path of a narrow gap at high pressure and high speed. Under such conditions, a sintered bearing is required to have further high strength, abrasion resistance, friction characteristics and corrosion resistance as well as compactness. Therefore, although a related-art copper-based sintered bearing has high strength, in particular, the corrosion resistance thereof is not sufficient.

As a sintered bearing to be used for such a purpose, for example, Patent Document 1 discloses a Cu-Ni-Sn-C-P-based sintered bearing.

On the other hand, as a sintered bearing excellent in mechanical characteristics and corrosion resistance, an aluminum bronze-based sintered bearing is known. This sintered bearing has a problem in that an aluminum oxide film generated on the surface during increase in temperature of sintering inhibits diffusion of aluminum, and hence a sintered compact having sufficient corrosion resistance and strength cannot be obtained easily. Patent Document 2 discloses a technology regarding mixed powder for sintered aluminum-containing copper alloy and a method of producing the mixed powder in order to solve the above-mentioned problem.

PRIOR ART DOCUMENTS

PATENT DOCUMENTS

   Patent Document 1: JP 4521871 B2
   Patent Document 2: JP 2009-7650 A

SUMMERY OF THE INVENTION

PROBLEMS TO BE SOLVED BY THE INVENTION

In the Cu-Ni-Sn-C-P-based sintered bearing disclosed in Patent Document 1, although strength and abrasion resistance are enhanced, corrosion resistance cannot be considered to be sufficient. Further, the sintered bearing contains Ni, which is a rare metal, and hence involves a problem in terms of cost as well.

The aluminum-containing copper alloy powder disclosed in Patent Document 2 is excellent in moldability and sintering property. However, further investigation is necessary in order to obtain a product suitable for mass production satisfying stable corrosion resistance, stable mechanical characteristics, compactness, and reduction in cost as an aluminum bronze-based sintered bearing using the aluminum-containing copper alloy powder.

In view of the problems of the related art, it is an object of the present invention to provide an aluminum bronze-based sintered bearing for a fuel pump, in which corrosion resistance, and mechanical characteristics such as strength and abrasion resistance are enhanced, and compactness and reduction in cost are realized, and to provide a method of manufacturing the aluminum bronze-based sintered bearing for a fuel pump, which has good productivity and low cost, and is thus suitable for mass production.

SOLUTIONS TO THE PROBLEMS

In order to improve the bearing function and achieve compactness, reduction in cost, and enhanced productivity in the aluminum bronze-based sintered bearing and the method of manufacturing the aluminum bronze-based sintered bearing, on the premise of a novel idea of effective use of expansion caused by sintering, the inventors of the present invention have made various investigations and test evaluations so as to suppress sulfidation corrosion caused by gasoline of inferior quality and corrosion caused by an organic acid and a biofuel and to ensure performance, such as initial conformability and durability, in the sintered bearing for a fuel pump under an environment that the sintered bearing is constantly brought into contact with gasoline as described above. With this, the inventors of the present invention have obtained the following findings, to thereby achieve the present invention.

(1) In a relationship between the blending amount of aluminum and the sulfidation corrosivity, as the blending amount of aluminum is increased, corrosion resistance is enhanced. The reason for this is considered as follows. When the blending amount of aluminum is increased, the diffusion of aluminum into copper is increased to enhance corrosion resistance.

(2) In a relationship between the blending amount of aluminum and the organic acid corrosivity, as the blending amount of aluminum is increased, corrosion resistance is degraded. However, when the blending amount of aluminum reaches the vicinity of 9.0% by weight, the weight change rate becomes smaller.

(3) In a relationship between the blending amount of aluminum and the aluminum bronze structure, as the blending amount of aluminum is increased, the ratio of a $\beta$-phase is increased. The $\beta$-phase is subjected to eutectoid transformation at 565°C to form an $\alpha$-phase and a $\gamma$-phase, and as the blending amount of aluminum is increased, the ratio of the $\gamma$-phase is increased. The $\gamma$-phase degrades organic acid corrosion resistance and initial conformability. Therefore, in the case where aluminum-copper alloy powder is used as a copper source and powder of a copper simple substance is not added, the ratio of the $\gamma$-phase and the $\alpha$-phase is set to $0 < \gamma\text{-phase}/\alpha\text{-phase} \leq 0.10$.

(4) In a relationship between the sintering temperature and the corrosion resistance, when the sintering temperature is increased, the diffusion of aluminum is increased to enhance corrosion resistance.

(5) It is considered that phosphorus serving as an additive can reduce the amount of aluminum through increase in diffusion of aluminum during a sintering step and reduce the precipitation of the $\gamma$-phase of an aluminum structure that degrades corrosion resistance and initial conformability.

(6) In a relationship between the blending amount of aluminum and each of the initial conformability time and the friction coefficient, the blending amount of aluminum and each of the initial conformability time and the friction coefficient have a proportional relationship. The reason for this is considered as follows. When the blending amount of aluminum is increased, the $\gamma$-phase is increased.

As a technical solution for achieving the above-mentioned object, according to one embodiment of the present invention, there is provided a sintered bearing for a fuel pump, comprising raw material powder comprising 8.5% by weight to 10% by weight of aluminum, 0.1% by weight to 0.6% by weight of phosphorus, and the balance comprising copper as a main component, and inevitable impurities, the sintered bearing having a structure of a sintered aluminum-copper alloy, the sintered bearing having a pore formed in a surface layer portion of the sintered bearing, the pore being smaller in size than an internal pore of the sintered bearing. Thus, corrosion resistance, mechanical characteristics such as strength and abrasion resistance, oil film formation property, and oil retaining property can be enhanced, and compactness and reduction in cost can be realized.

Further, as a method of manufacturing a sintered bearing for a fuel pump according to one embodiment of the present invention, there is provided a method of manufacturing a sintered bearing for a fuel pump, the sintered bearing comprising raw material powder comprising 8.5% by weight to 10% by weight of aluminum, 0.1% by weight to 0.6% by weight of phosphorus, and the balance comprising copper as a main component, and inevitable impurities, the method using aluminum-copper alloy powder, electrolytic copper powder, and phosphorus-copper alloy powder as the raw material powder, the method comprising at least: a molding step of molding a green compact having a sintering aid added to the raw material powder; a sintering step of obtaining, from the green compact, a sintered compact having a structure of an aluminum-copper alloy; and a sizing step of subjecting the sintered compact to dimension shaping. Thus, it is possible to realize a method of manufacturing an aluminum bronze-based sintered bearing for a fuel pump, which has good productivity and low cost, and is thus suitable for mass production. In the sintered bearing for a fuel pump manufactured by the manufacturing method, corrosion resistance, mechanical characteristics such as strength and abrasion resistance, oil film formation property, and oil retaining property can be enhanced, and compactness can be realized.

It is preferred that the structure of the aluminum-copper alloy comprise an $\alpha$-phase. The $\alpha$-phase is effective for organic acid corrosion resistance and initial conformability.

In the case where the structure of the aluminum-copper alloy (hereinafter sometimes referred to as "aluminum bronze structure") uses aluminum-copper alloy powder as a copper source and powder of a copper simple substance is not added, it is preferred that a ratio $\gamma$-phase/$\alpha$-phase of the $\gamma$-phase and the $\alpha$-phase be set to $0<\gamma$-phase/$\alpha$-phase$\leq 0.10$. When the ratio $\gamma$-phase/$\alpha$-phase falls within the range of $0<\gamma$-phase/$\alpha$-phase$\leq 0.10$, organic acid corrosion resistance and initial conformability become excellent.

It is preferred that, as the blending amount of graphite, 3% by weight to 10% by weight of graphite be added with respect to a total of 100% by weight of the raw material powder comprising aluminum, phosphorus, and the balance comprising copper as a main component, and inevitable impurities. For example, a sintered bearing for a fuel pump having added thereto 3% by weight to 5% by weight of graphite can be used. When the blending amount of graphite is less than 3% by weight, the effect of enhancing lubricity and corrosion resistance through the addition of graphite is not attained in the sintered bearing for a fuel pump. Meanwhile, when the blending amount of graphite is more than 5% by weight, for example, there is a concern that the diffusion of aluminum into copper may start being inhibited. When the addition amount of graphite is more than 10% by weight, the diffusion of aluminum into copper is inhibited, and hence care needs to be taken. Corrosion resistance is enhanced when the addition amount of graphite is increased. However, when the addition amount of graphite reaches 10% by weight, the abrasion amount is slightly increased, which is considered to be caused by decrease in material strength.

It is preferred that the graphite powder be obtained by granulating and pulverizing fine powder of natural graphite or artificial graphite with a resin binder to have a grain diameter of 145 mesh or less. In general, when 4% by weight or more of graphite is added, the resultant material cannot be molded. However, through use of granulated graphite, the material can be molded.

In the above-mentioned sintered bearing for a fuel pump, it is preferred that the sintered bearing for a fuel pump be free of tin to be added as the sintering aid. Tin is not preferred because tin inhibits the diffusion of aluminum.

In the above-mentioned sintered bearing for a fuel pump, it is more preferred that a content of aluminum be set to from 9% by weight to 9.5% by weight. The sintered bearing for a fuel pump can be used as long as the content of aluminum is from 8.5% by weight to 10% by weight, and the range of from 9% by weight to 9.5% by weight is the optimum range.

It is preferred that a total of 0.05% by weight to 0.2% by weight of aluminum fluoride and calcium fluoride be added as the sintering aid with respect to a total of 100% by weight of the raw material powder comprising the aluminum-copper alloy powder, the electrolytic copper powder, and the phosphorus-copper alloy powder. When the total blending amount of aluminum fluoride and calcium fluoride is less than 0.05% by weight, the effect as the sintering aid becomes insufficient, and hence a dense sintered compact having appropriate strength is not obtained. On the other hand, when the total blending amount of aluminum fluoride and calcium fluoride is more than 0.2% by weight, the effect as the sintering aid is not enhanced even when the blending amount is increased any more, and hence it is preferred that the total blending amount of aluminum fluoride and calcium fluoride be limited to 0.2% by weight or less from the viewpoint of cost.

It is preferred that a ratio d2/d1 of a mean grain diameter d1 of the aluminum-copper alloy powder and a mean grain diameter d2 of the electrolytic copper powder be set to from 2 to 3. When the ratio d2/d1 falls within this range, aluminum can be sufficiently diffused into copper, and corrosion resistance becomes excellent.

It is preferred that the electrolytic copper powder comprise powders having different shapes, and that a ratio W2/W1 of a proportion W1 of the electrolytic copper powder having an aspect ratio of 2 or more and a proportion W2 of the electrolytic copper powder having an aspect ratio of less than 2 be set to from 3 to 9. The electrolytic copper powder having an aspect ratio of 2 or more is effective for diffusing aluminum, but moldability becomes poor. It is not preferred that the ratio W2/W1 be less than 3 from the viewpoint of moldability. Meanwhile, it is not preferred that the ratio W2/W1 be more than 9 because the diffusion of aluminum becomes insufficient. The aspect ratio herein refers to a ratio obtained by dividing the long axis length of powder by the thickness thereof.

As a method of manufacturing a sintered bearing for a fuel pump according to a second embodiment of the present invention, there is provided a method of manufacturing a sintered bearing for a fuel pump, the sintered bearing comprising raw material powder comprising 8.5% by weight to 10% by weight of aluminum, 0.1% by weight to 0.6% by weight of phosphorus, and the balance comprising copper as a main component, and inevitable impurities, the method using aluminum-copper alloy powder and phosphorus-copper alloy powder as the raw material powder without adding powder of a copper simple substance to the raw material powder, the method comprising at least: a molding step of molding a green compact having a sintering aid added to the raw material powder; a sintering step of obtaining, from the green compact, a sintered compact having a structure of an aluminum-copper alloy; and a sizing step of subjecting the sintered compact to dimension shaping. In this case, the description "without adding powder of a copper simple substance" is used as the meaning of allowing powder of a copper simple substance contained inevitably on a manufacturing site.

The second embodiment of the present invention as the manufacturing method can also realize a method of manufacturing an aluminum bronze-based sintered bearing for a fuel pump, which has good productivity and low cost, and is thus suitable for mass production. Further, in the sintered bearing for a fuel pump manufactured by the manufacturing method, corrosion resistance, mechanical characteristics such as strength and abrasion resistance, oil film formation property, and oil retaining property can be enhanced, and compactness can be realized. Further, powder of a copper simple substance is not added, and hence a portion in which the copper simple substance is concentrated does not substantially exist and the occurrence of corrosion due to such portion is avoided. In addition, corrosion resistance of each grain of aluminum-copper alloy powder is enhanced. Thus, corrosion resistance can be ensured even under severer use environment.

The aluminum-copper alloy powder serving as the raw material powder is preferably 7% by weight to 11% by weight of aluminum-copper alloy powder, more preferably, for example, 8% by weight to 10% by weight of aluminum-copper alloy powder. In those cases, corrosion resistance of each grain of the aluminum-copper alloy powder is enhanced so that corrosion resistance of the entire sintered bearing for a fuel pump is enhanced.

EFFECTS OF THE INVENTION

In the sintered bearing for a fuel pump according to the one embodiment of the present invention, corrosion resistance, mechanical characteristics such as strength and abrasion resistance, oil film formation property, and oil retaining property can be enhanced, and compactness and reduction in cost can be realized. Further, the method of manufacturing a sintered bearing for a fuel pump according to the one embodiment of the present invention can realize a method of manufacturing an aluminum bronze-based sintered bearing for a fuel pump, which has good productivity and low cost, and is thus suitable for mass production.

Further, according to the second embodiment of the present invention as the manufacturing method using the aluminum-copper alloy powder without adding powder of a copper simple substance, a portion in which a copper simple substance is concentrated does not substantially exist and the occurrence of corrosion due to such portion is avoided. In addition, corrosion resistance of each grain of aluminum-copper alloy powder is enhanced. Thus, corrosion resistance can be ensured even under severer use environment.

BRIEF DESCRIPTION OF DRAWINGS

FIG. 1 is a vertical sectional view for illustrating an overview of a fuel pump in which a sintered bearing for a fuel pump according to a first embodiment of the present invention is used.

FIG. 2 is a vertical sectional view of the sintered bearing for a fuel pump according to the first embodiment of the present invention and a sintered bearing for a fuel pump manufactured by a manufacturing method according to the first embodiment of the present invention.

FIG. 3a is a schematic view of an enlarged metal structure in the portion A of FIG. 2.

FIG. 3b is a schematic view of an enlarged metal structure in the portion B of FIG. 2.

FIG. 3c is a schematic view of an enlarged metal structure in the portion C of FIG. 2.

FIG. 4 is a graph for showing test results on a relationship between the blending amount of aluminum and the sulfidation corrosivity.

FIG. 5 is a graph for showing test results on a relationship between the blending amount of aluminum and the organic acid corrosivity.

FIG. 6 is a graph for showing test results on a relationship between the blending amount of aluminum and the elution amount of copper ions.

FIG. 7 is a graph for showing test results on a relationship between the blending amount of aluminum and the initial conformability time.

FIG. 8 is a graph for showing test results on a relationship between the blending amount of aluminum and the friction coefficient.

FIG. 9 is a diagram for illustrating manufacturing steps of the sintered bearing for a fuel pump of FIG. 2.

FIG. 10 is a schematic view of a mixer for raw material powder.

FIG. 11 is a schematic view of a mesh-belt type continuous furnace.

FIG. 12a is a view for illustrating a state in which a sintered compact is set on a mold for sizing processing.

FIG. 12b is a view for illustrating a state in which a core is lowered.

FIG. 12c is a view for illustrating a state in which sizing processing is finished.

FIG. 13 is a view for illustrating a compressed state of a product during a sizing step.

FIG. 14 is a schematic view of an oil impregnation device.

FIG. 15 is a graph for showing test results on a relationship between the blending amount of aluminum and the organic acid corrosivity in a sintered bearing for a fuel pump according to a second embodiment of the present invention.

FIG. 16 is a graph for showing test results on a relationship between the blending amount of aluminum and the elution amount of copper ions in the sintered bearing for a fuel pump according to the second embodiment of the present invention.

EMBODIMENTS OF THE INVENTION

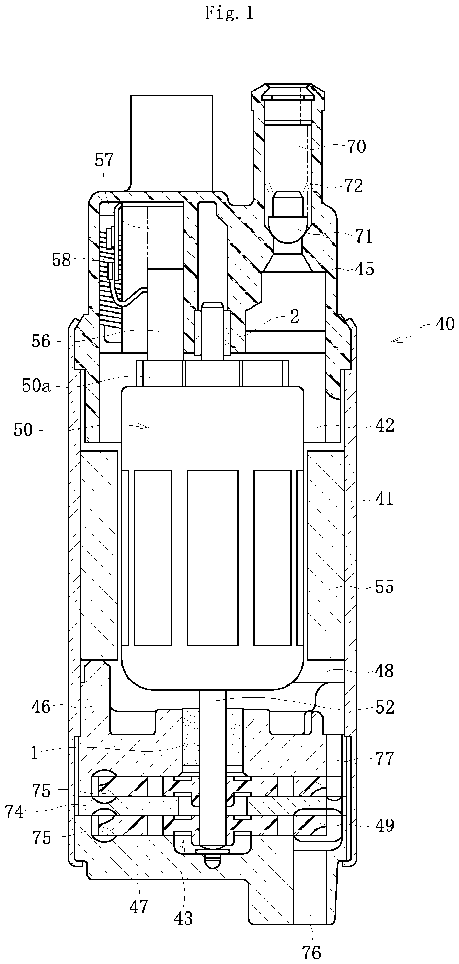

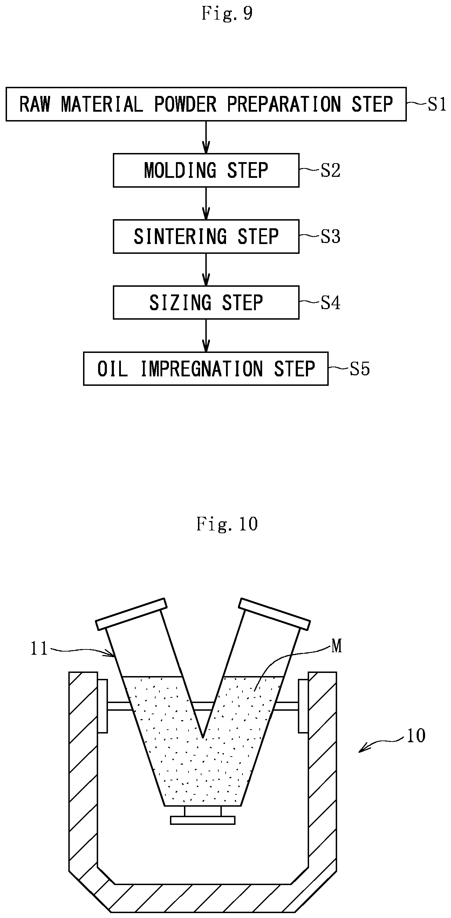

Now, a sintered bearing for a fuel pump according to a first embodiment of the present invention and a method of manufacturing the sintered bearing according to the first embodiment of the present invention are described with reference to the attached drawings. FIG. 1 to FIG. 8 are illustrations of the sintered bearing for a fuel pump according to the first embodiment, and FIG. 9 to FIG. 14 are illustrations of the manufacturing method according to the first embodiment.

FIG. 1 is a vertical sectional view for illustrating an overview of a fuel pump in which the sintered bearing according to this embodiment is used. In an electric fuel pump 40, a motor part 42 is incorporated into an upper portion of a cylindrical metallic housing 41, and a pump part 43 is incorporated into a lower side thereof. A motor cover 45 made of a synthetic resin is caulked and fixed onto an upper end portion of the housing 41. A pump cover 46 made of a metal and a pump body 47 are mounted on a lower end portion of the housing 41. A motor part chamber 48 is formed between the motor cover 45 and the pump cover 46 in the housing 41, and a pump part chamber 49 is formed between the pump cover 46 and the pump body 47. The pump cover 46 forms a partition wall configured to partition the motor part chamber 48 from the pump part chamber 49.

An armature 50 of a motor is arranged in the motor part chamber 48. Upper and lower end portions of a shaft 52 of the armature 50 are rotatably supported by the motor cover 45 and the pump cover 46 respectively through intermediation of slide bearings 1 and 2. The slide bearings 1 and 2 serve as the sintered bearing for a fuel pump according to this embodiment.

A magnet 55 is fixed onto an inner peripheral surface of the housing 41 at a predetermined interval with respect to an outer peripheral surface of the armature 50. A brush 56 that is brought into slide-contact with a commutator 50a of the armature 50 is incorporated into the motor cover 45 in a state of being urged with a spring 57. The brush 56 is brought into conduction with an external connection terminal (not shown) through a choke coil 58. A discharge port 70 connected to a fuel supply pipe (not shown) communicating to a fuel injection valve is formed in the motor cover 45. A check valve 71 configured to block a reverse flow of fuel is incorporated into the discharge port 70 in a state of being urged in a closure direction with a spring 72.

A plate 74 is interposed between the pump cover 46 and the pump body 47 of the pump part 43 to partition the pump part chamber 49 into two chambers. An impeller 75 is arranged in each chamber. Both the impellers 75 are connected to the lower end portion of the shaft 52 and rotated and driven by the motor part 42. A suction port 76 is formed in the pump body 47, and a communication port 77 is formed in the pump cover 46.

The fuel pump 40 rotates the impellers 75 of the pump part 43 with the motor part 42. With this, the fuel in the fuel tank is pumped up to the pump part chamber 49 through the suction port 76, and the fuel enters the motor part chamber 48 through the communication port 77 of the pump cover 46 via a flow path of the pump part 43 to be discharged through the discharge port 70. Thus, the sintered bearings 1 and 2 for a fuel pump according to this embodiment, which rotatably support the shaft 52 of the armature 50, are in an environment of being constantly brought into contact with the fuel (such as gasoline). The fuel pump 40 illustrated in FIG. 1 is, for example, an in-tank type fuel pump 40 that is immersed in liquid fuel, such as gasoline.

Now, the type of the fuel pump is described. As the fuel pump, for example, there are given two types: an in-tank type fuel pump and an out-tank type fuel pump.

The in-tank type fuel pump is, for example, a type that is used in such a manner that the fuel pump itself is immersed in liquid fuel, such as gasoline. Therefore, the sintered bearings 1 and 2 used in, for example, the in-tank type fuel pump are not necessarily required to be impregnated with oil. However, in order to minimize initial abrasion, it is preferred that the sintered bearings 1 and 2 used in the in-tank type fuel pump be impregnated with oil.

On the other hand, the out-tank type fuel pump is a type that is used in the atmosphere while the fuel pump itself is not immersed in liquid fuel, such as gasoline. Even the sintered bearings used in, for example, the out-tank type fuel pump are not necessarily required to be impregnated with oil. However, in order to minimize initial abrasion, it is also preferred that the sintered bearings used in the out-tank type fuel pump be impregnated with oil.

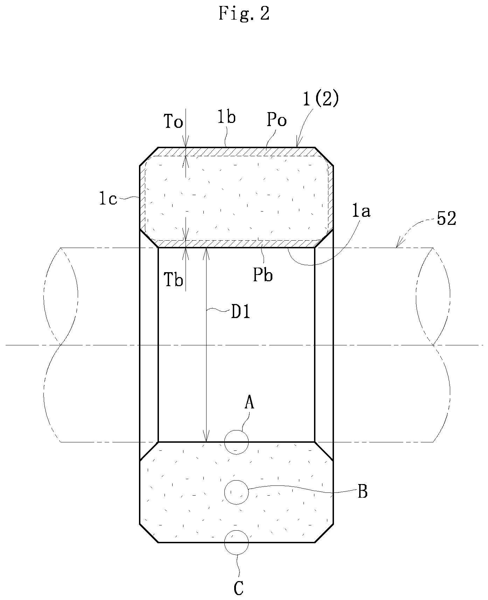

A vertical sectional view of the sintered bearing for a fuel pump according to this embodiment is illustrated in FIG. 2. The sintered bearing 1 for a fuel pump (hereinafter sometimes referred to simply as "sintered bearing") is formed into a cylindrical shape having a bearing surface 1a on an inner periphery. When the shaft 52 of the armature 50 (see FIG. 1) is inserted to the inner periphery of the sintered bearing 1 and the shaft 52 is rotated in this state, lubricating oil retained in an indefinite number of pores of the sintered bearing 1 seeps out from the bearing surface 1a along with increase in temperature. The lubricating oil that has seeped out forms an oil film in a bearing gap between the outer peripheral surface of the shaft 52 and the bearing surface 1a, and hence the shaft 52 is supported by the bearing 1 so as to be rotatable relatively. The sintered bearing 2 has a shape and dimensions different from those of the sintered bearing 1 but is the same as the sintered bearing 1 in terms of function. Therefore, a description is made by taking the sintered bearing 1 as an example, and the description of the sintered bearing 2 is omitted with reference symbol 2 being placed together in FIG. 2.

The sintered bearing 1 for a fuel pump according to this embodiment is formed by filling a mold with raw material powder obtained by mixing various powders, compressing the raw material powder to mold a green compact, and then sintering the green compact.

The raw material powder is mixed powder obtained by mixing aluminum-copper alloy powder, copper powder, phosphorus-copper alloy powder, graphite powder, and aluminum fluoride and calcium fluoride serving as a sintering aid. The detail of each powder is described below.

[Aluminum-Copper Alloy Powder]

Aluminum (40% by weight to 60% by weight)-copper alloy powder is pulverized to adjust a grain size thereof. The aluminum-copper alloy powder has a grain diameter of 100 $\mu$m or less and a mean grain diameter of 35 $\mu$m. The term "mean grain diameter" as used herein refers to a mean value of grain diameters measured with laser diffraction. Specifically, the mean grain diameter is intended to refer to a mean value of grain diameters when 5,000 grains of powder is measured with laser diffraction by SALD-3100 manufactured by Shimadzu Corporation.

Through use of the aluminum-copper alloy powder, the effects of additives, such as graphite and phosphorus, can be attained, and a sintered bearing material becomes excellent in corrosion resistance, strength, sliding characteristics, and the like. Further, the aluminum-copper alloy powder is alloyed powder, and hence there is no handling problem involved in flying of aluminum simple substance powder having a small specific gravity.

An $\alpha$-phase of an aluminum bronze structure is most excellent in corrosion resistance to sulfidation corrosion and organic acid corrosion, and initial conformability. Through use of the aluminum (40% by weight to 60% by weight)-copper alloy powder, a sintered bearing with strength can be manufactured even when graphite is added. A $\gamma$-phase of the structure is excellent in abrasion resistance but is poor in organic acid corrosion resistance and initial conformability. It is preferred that, in the aluminum bronze structure, a ratio $\gamma$-phase/$\alpha$-phase of the $\gamma$-phase to the $\alpha$-phase be 0.10$\leq\gamma$-phase/$\alpha$-phase$\leq$0.25. It is not preferred that the ratio $\gamma$-phase/$\alpha$-phase be less than 0.10 because abrasion resistance is degraded. Meanwhile, it is not preferred that the ratio $\gamma$-phase/$\alpha$-phase be more than 0.25 because initial conformability and organic acid corrosion resistance are degraded.

[Copper Powder]

As the copper powder, there are given atomized powder, electrolytic powder, and pulverized powder. However, in order to sufficiently diffuse aluminum into copper, dendritic electrolytic powder is effective and is excellent in moldability, sintering property, and sliding characteristics. Therefore, in this embodiment, electrolytic powder was used as the copper powder. Further, in order to sufficiently diffuse aluminum into copper, it is preferred that two kinds of electrolytic copper powders having different powder shapes be used, and that a ratio W2/W1 of a proportion W1 of the electrolytic copper powder having an aspect ratio of 2 or more and a proportion W2 of the electrolytic copper powder having an aspect ratio of less than 2 be set to from 3 to 9. The electrolytic copper powder having an aspect ratio of 2 or more is effective for diffusing aluminum but has poor moldability. It is not preferred that the ratio W2/W1 be less than 3 from the viewpoint of moldability. Meanwhile, it is not preferred that the ratio W2/W1 be more than 9 because the diffusion of aluminum becomes insufficient.

In this embodiment, the electrolytic copper powder having a mean grain diameter of 85 $\mu$m was used. It is preferred that a ratio d2/d1 of a mean grain diameter d1 of the above-mentioned aluminum-copper alloy powder and a mean grain diameter d2 of the electrolytic copper powder be set to from 2 to 3. When the ratio d2/d1 falls within such range, aluminum can be sufficiently diffused into copper, and corrosion resistance becomes excellent. Therefore, in this embodiment, the mean grain diameter d1 of the aluminum-copper alloy powder was set to 35 $\mu$m, and the mean grain diameter d2 of the electrolytic copper powder was set to 85 $\mu$m. Note that, the grain diameter is not limited thereto, and the aluminum-copper alloy powder having a mean grain diameter of about from 20 $\mu$m to 65 $\mu$m can be used, and the electrolytic copper powder having a grain diameter of 200 $\mu$m or less and a mean grain diameter of about from 60 $\mu$m to 120 $\mu$m can be used.

[Phosphorus Alloy Powder]

As the phosphorus alloy powder, phosphorus (7% by weight to 10% by weight)-copper alloy powder was used. Phosphorus has the effect of enhancing wettability between a solid phase and a liquid phase during sintering. It is preferred that the blending amount of phosphorus be from 0.1% by weight to 0.6% by weight, specifically 0.1% by weight to 0.4% by weight. When the blending amount of phosphorus is less than 0.1% by weight, the accelerating effect on the sintering between the solid phase and the liquid phase is unsatisfactory. Meanwhile, when the blending amount of phosphorus is more than the above-mentioned 0.6% by weight, preferably 0.4% by weight, the sintering proceeds excessively, and aluminum is segregated to increase the precipitation of a γ-phase, with the result that a sintered compact becomes brittle.

[Graphite Powder]

Graphite is present mainly as free graphite in pores dispersed and distributed in a substrate and contributes to the enhancement of abrasion resistance by imparting excellent lubricity to a sintered bearing. The blending amount of graphite is preferably from 3% by weight to 10% by weight and may be, for example, from 3% by weight to 5% by weight, with respect to a total of 100% by weight of the raw material powder comprising aluminum, phosphorus, and the balance comprising copper as a main component, and inevitable impurities. When the blending amount of graphite is less than 3% by weight, the effects of enhancing lubricity and abrasion resistance through the addition of graphite are not attained in the sintered bearing for a fuel pump. Meanwhile, when the blending amount of graphite is more than 5% by weight, for example, there is a concern that the diffusion of aluminum into copper may start being inhibited. It is not preferred that the addition amount of graphite be more than 10% by weight because the material strength is decreased, and the diffusion of aluminum into copper is inhibited. In general, when 4% by weight or more of graphite is added, the resultant material cannot be molded. However, through use of granulated graphite, the material can be molded. In this embodiment, the graphite powder obtained by granulating and pulverizing fine powder of natural graphite or artificial graphite with a resin binder to a grain diameter of 145 mesh or less was used.

[Aluminum Fluoride and Calcium Fluoride]

An aluminum oxide film to be generated on a surface of aluminum-copper alloy powder during sintering inhibits the sintering remarkably. However, aluminum fluoride and calcium fluoride serving as the sintering aid gradually evaporate while being melted at a sintering temperature of from 850°C to 900°C of the aluminum-copper alloy powder and protect the surface of the aluminum-copper alloy powder to suppress the generation of aluminum oxide, thereby accelerating the sintering to increase the diffusion of aluminum. Aluminum fluoride and calcium fluoride evaporate and volatilize during sintering, and hence hardly remain in a finished product of the sintered bearing.
It is preferred that a total of about 0.05% by weight to about 0.2% by weight of aluminum fluoride and calcium fluoride be added as the sintering aid with respect to a total of 100% by weight of the raw material powder comprising aluminum, phosphorus, and the balance comprising copper as a main component, and inevitable impurities. When the addition amount of aluminum fluoride and calcium fluoride is less than 0.05% by weight, the effect thereof as the sintering aid becomes insufficient, and hence a dense sintered compact having appropriate strength is not obtained. Meanwhile, when the addition amount of aluminum fluoride and calcium fluoride is more than 0.2% by weight, the effect thereof as the sintering aid is not attained any more even when aluminum fluoride and calcium fluoride are added more. Therefore, it is preferred that the addition amount be 0.2% by weight or less from the viewpoint of cost.
In the sintered bearing for a fuel pump according to this embodiment and the method of manufacturing the sintered bearing as described later, aluminum-copper alloy powder, electrolytic copper powder, and phosphorus alloy powder were mixed at such a ratio that the content of aluminum was from 8.5% by weight to 10% by weight, the content of phosphorus was from 0.1% by weight to 0.4% by weight, and the balance comprised copper as a main component, and graphite powder was mixed with respect to a total of 100% by weight of the above-mentioned mixture so that the blending amount of graphite was from 3% by weight to 5% by weight to obtain raw material powder. As the sintering aid, a total of 0.05% by weight to 0.2% by weight of aluminum fluoride and calcium fluoride was added, and 0.1% by weight to 1% by weight of a lubricant, such as zinc stearate or calcium stearate, was added so as to enhance moldability.
Specifically, for example, in the sintered bearing for a fuel pump according to this embodiment and the method of manufacturing the sintered bearing as described later, aluminum-copper alloy powder, electrolytic copper powder, and phosphorus alloy powder were mixed at such a ratio that the content of aluminum was from 8.5 parts by weight to 10 parts by weight, the content of phosphorus was from 0.1 part by weight to 0.4 part by weight, and the balance comprised copper as a main component, and graphite powder was mixed with respect to a total of 100 parts by weight of the above-mentioned mixture so that the blending amount of graphite was from 3 parts by weight to 5 parts by weight to obtain raw material powder. The blending amount of graphite is preferably from 3 parts by weight to 10 parts by weight and may be, for example, from 3 parts by weight to 5 parts by weight, with respect to a total of 100 parts by weight of the raw material powder comprising aluminum, phosphorus, and the balance comprising copper as a main component, and the inevitable impurities. When the blending amount of graphite is less than 3 parts by weight, the effects of enhancing lubricity and abrasion resistance through the addition of graphite are not attained in the sintered bearing for a fuel pump. Meanwhile, when the blending amount of graphite is more than 5 parts by weight, for example, there is a concern that the diffusion of aluminum into copper may start being inhibited. It is not preferred that the addition amount of graphite be more than 10 parts by weight because the material strength is decreased, and the diffusion of aluminum into copper is inhibited. In general, when 4 parts by weight or more of graphite is added, the resultant material cannot be molded. However, through use of granulated graphite, the material can be molded. In this embodiment, graphite powder obtained by granulating and pulverizing fine powder of natural graphite or artificial graphite with a resin binder to a grain diameter of 145 mesh or less was used. As the sintering aid, a total of 0.05 part by weight to 0.2 part by weight of aluminum fluoride and calcium fluoride was added, and 0.1 part by weight to 1 part by weight of a lubricant, such as zinc stearate or calcium stearate, was added so as to enhance moldability.

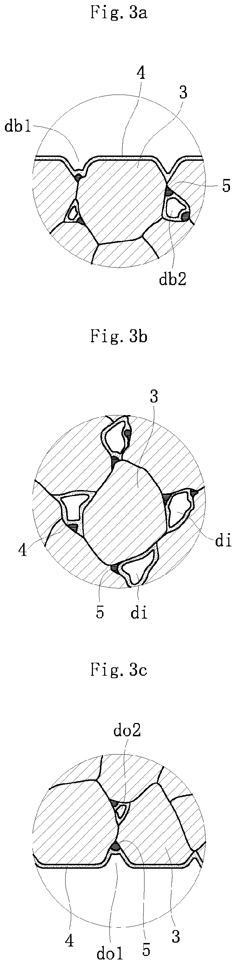

FIGS. 3 are schematic views for illustrating a metal structure in a cross-section of the sintered bearing according to this embodiment. FIG. 3a is an enlarged view of the portion A of FIG. 2. Similarly, FIG. 3b is an enlarged view of the portion B of FIG. 2. FIG. 3c is an enlarged view of the portion C of FIG. 2. That is, FIG. 3a is an illustration of a metal structure of a surface layer portion of a bearing surface on a radially inner side. FIG. 3b is an illustration of a metal structure of an inside. FIG. 3c is an illustration of a metal structure of a surface layer portion of a radially outer surface. As illustrated in FIG. 3a, FIG. 3b, and FIG. 3c, an aluminum-copper alloy structure 3 is a hatched portion, and an aluminum oxide film 4 is present on a surface and around an internal pore. Therefore, the aluminum-copper alloy structure is excellent in corrosion resistance and abrasion resistance. Although not shown, in a grain boundary portion of the aluminum-copper alloy structure 3, phosphorus is present in large amount. Free graphite 5 is distributed in the pore, and hence the aluminum-copper alloy structure is excellent in lubricity and abrasion resistance.

As illustrated in FIG. 3a, an open pore db1 is formed on the bearing surface on a radially inner side and an internal pore db2 is formed in a surface layer of the bearing surface. As illustrated in FIG. 3b, pores di are formed in the bearing, and as illustrated in FIG. 3c, an open pore do1 is formed on a radially outer surface and an internal pore do2 is formed in a surface layer of the radially outer surface. The open pore db1 formed on the bearing surface, the internal pore db2 formed in the surface layer of the bearing surface, the pore di formed in the bearing, the open pore do1 formed on the radially outer surface, and the internal pore do2 formed in the surface layer of the radially outer surface communicate to each other.

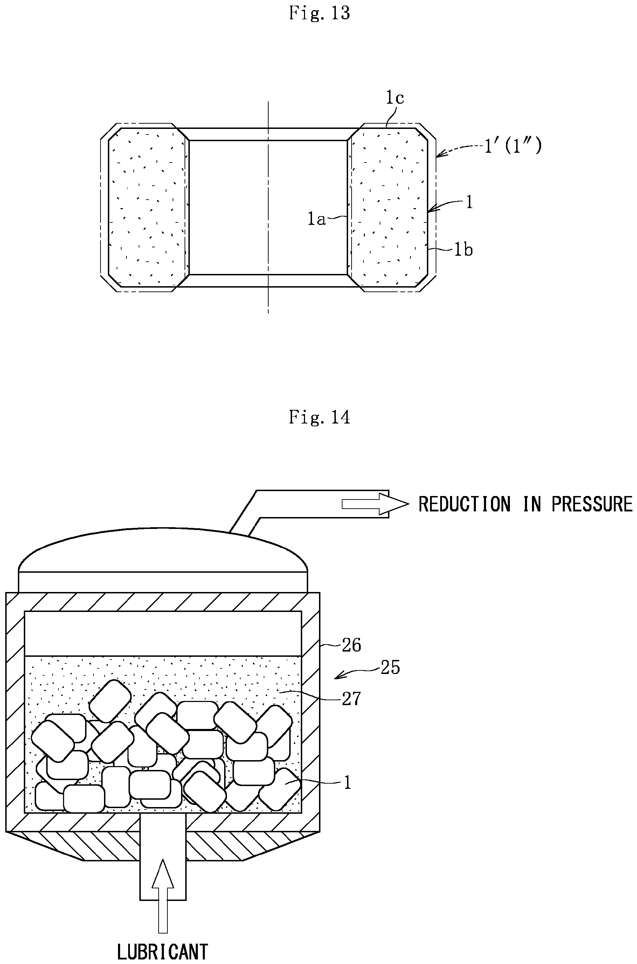

In the sintered bearing 1, both a radially outer surface 1b of the bearing and the bearing surface 1a on the radially inner side are subjected to sizing processing after sintering in a manufacturing method (see FIG. 13) described later. In addition, an aluminum bronze-based sintered bearing expands by sintering, and hence the radially outer surface 1b of the bearing is sized in an amount larger than that of the bearing surface 1a on the radially inner side. Therefore, the pores do (see FIG. 3c) in the surface layer portion on the radially outer surface 1b side are more crushed than the pores db (see FIG. 3a) in the surface layer portion on the bearing surface 1a side. When the pore do in the surface layer portion on the radially outer surface 1b side, the pore db in the surface layer portion on the bearing surface 1a side, and the pore di (see FIG. 3b) in the bearing that is not crushed are compared to each other in terms of size, a relationship of do<db<di is satisfied. By virtue of this relationship, corrosion resistance and oil film formation property can be enhanced on the bearing surface 1a side. On the other hand, on the radially outer surface 1b side and an end surface 1c side close to a closed state, corrosion resistance and oil retaining property can be enhanced.

The pores do, db, and di of the sintered bearing 1 are impregnated with lubricating oil. Thus, a satisfactory lubrication state can be obtained from the beginning of an operation. As the lubricating oil, mineral oil, poly-$\alpha$-olefin (PAO), an ester, liquid grease, or the like can be used. Note that, it is not necessarily required to impregnate those pores with the lubricating oil in some use purposes of a bearing.

In FIG. 2, a compressed layer in a surface layer of the sintered bearing 1 is illustrated with hatching. Hatching is provided only to an upper half in a radial direction of the bearing 1, and hatching is omitted in a lower half thereof. The surface layer of the sintered bearing 1 has a compressed layer. A density ratio $\alpha$o of a compressed layer Po in the surface layer on the radially outer surface 1b side and a density ratio $\alpha$b of a compressed layer Pb in the surface layer on the bearing surface 1a side are both higher than a density ratio $\alpha$i of the inside, and both of the density ratios $\alpha$o and $\alpha$b are set in a range of 80%$\leq\alpha$o and $\alpha$b$\leq$95%. It is not preferred that the density ratios $\alpha$o and $\alpha$b be less than 80% because the bearing strength becomes insufficient. On the other hand, it is not preferred that the density ratios $\alpha$o and $\alpha$b be more than 95% because the oil content becomes insufficient.

In addition, when an average value of depths of the compressed layer Po in the surface layer on the radially outer surface 1b side is defined as To, an average value of depths of the compressed layer Pb in the surface layer on the bearing surface 1a side is defined as Tb, and ratios of To and Tb to an inner diameter dimension D1 of the bearing surface are defined as To/D1 and Tb/D1, respectively, it is preferred that relationships of 1/100$\leq$To/D1 and Tb/D1$\leq$1/15 be satisfied. Herein, the density ratio $\alpha$ is represented by the following expression:

$$\alpha(\%)=(\rho1/\rho0)\times100$$

where $\rho1$ represents a density of a porous body, and $\rho0$ represents a density on the assumption that the porous body has no micropores. It is not preferred that To/D1 and Tb/D1 be less than 1/100 because pores are crushed insufficiently. On the other hand, it is not preferred that To/D1 and Tb/D1 be more than 1/15 because pores are crushed excessively.

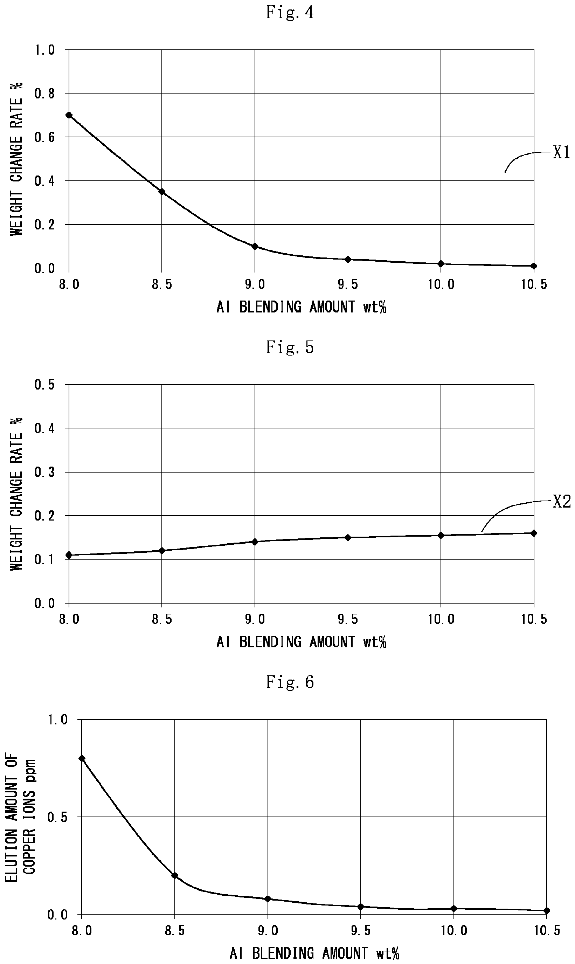

Next, the results of verification for achieving this embodiment are described with reference to FIG. 4 to FIG. 8. The broken lines X1 to X4 of FIG. 4, FIG. 5, FIG. 7, and FIG. 8 indicate an allowable level of each test item.

FIG. 4 is a graph for showing results obtained by testing a relationship between the blending amount of aluminum (Al) and the sulfidation corrosivity. It was confirmed that as the blending amount of aluminum was increased, corrosion resistance was enhanced. From the test results, it is understood that the blending amount of aluminum needs to be 8.5% by weight or more with respect to sulfidation corrosion resistance of the sintered bearing for a fuel pump.

[Test Conditions]

- Solvent: 300 ppm of sulfur was added to commercially available gasoline
- Temperature: 80°C
- Time: 300 hours
- Test method: immersion

FIG. 5 is a graph for showing results obtained by testing a relationship between the blending amount of aluminum and the organic acid corrosivity. It was understood that as the blending amount of aluminum was increased, corrosion resistance was decreased. Note that, when the blending amount of aluminum reaches the vicinity of 9.0% by weight, the weight change rate becomes smaller. The reason for increase in weight change rate with increase in blending amount of aluminum is considered to be the elution of copper ions and aluminum ions. The reason for increase in elution of the copper ions and the aluminum ions is considered to be increase in precipitation of the $\gamma$-phase of the aluminum structure. From the test results, it is understood that the blending amount of aluminum needs to be 10% by weight or less with respect to organic acid corrosion resistance of the sintered bearing for a fuel pump.

[Test Conditions]

- Solvent: organic acid having a concentration of 2%
- Temperature: 50°C
- Time: 100 hours
- Test method: immersion

FIG. 6 is a graph for showing results obtained by testing a relationship between the blending amount of aluminum and the elution amount of copper ions. It was confirmed that as the blending amount of aluminum was increased, the elution amount of copper ions was decreased, and that the elution amount of copper ions was abruptly decreased from the vicinity of 8.5% by weight of the blending amount of aluminum. The reason for decrease in elution amount of copper ions is considered as follows. When the blending amount of aluminum is increased, the diffusion thereof proceeds sufficiently. Also from the test results, it is understood that the blending amount of aluminum needs to be 8.5% by weight or more.

[Test Conditions]

- Solvent: organic acid having a concentration of 2%
- Temperature: 50°C
- Time: 100 hours
- Test method: immersion

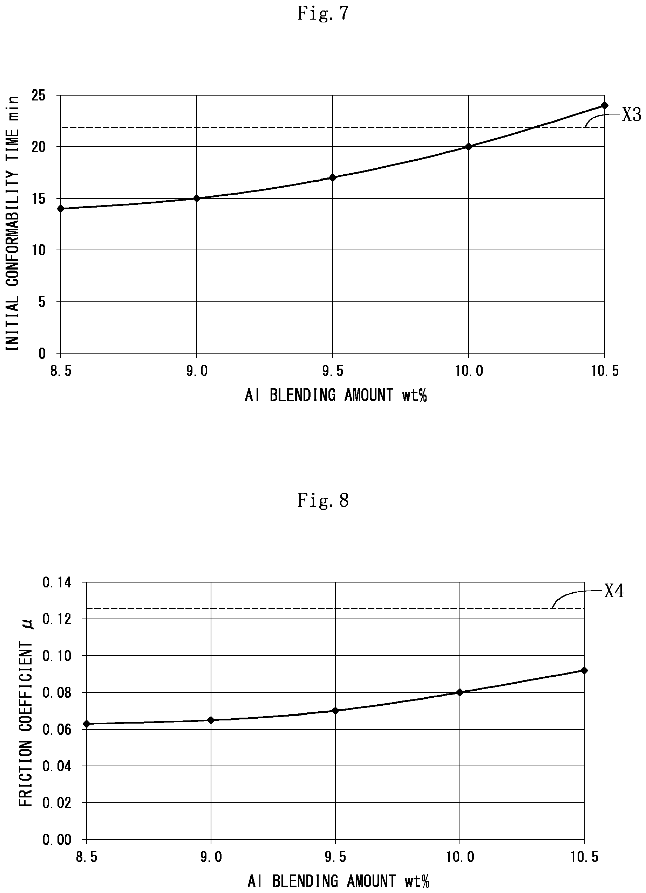

FIG. 7 is a graph for showing results obtained by testing a relationship between the blending amount of aluminum and the initial conformability time. It was confirmed that the blending amount of aluminum and the initial conformability time had a proportional relationship. The reason for this is considered as follows. When the blending amount of aluminum is increased, a hard $\gamma$-phase is increased in the aluminum structure. From the test results, it is understood that the blending amount of aluminum needs to be 10% by weight or less with respect to the initial conformability of the sintered bearing for a fuel pump.

[Test Conditions]

- PV value: 50 MPa·m/min
- Sample size: inner diameter 5 mm × outer diameter 10 mm × width 7 mm
- Test time: 30 min

FIG. 8 is a graph for showing results obtained by testing a relationship between the blending amount of aluminum and the friction coefficient. It was confirmed that the blending amount of aluminum and the friction coefficient had a proportional relationship. The reason for this is considered as follows. When the blending amount of aluminum is increased, a hard $\gamma$-phase is increased in the aluminum structure. It is understood that when the blending amount of aluminum is 10% by weight or less, the friction coefficient has sufficient allowance with respect to the allowable level X4.

[Test Conditions]

- PV value: 50 MPa·m/min
- Sample size: inner diameter 5 mm × outer diameter 10 mm × width 7 mm
- Test time: 30 min

The results obtained by measuring the hardness of the sintered bearing for a fuel pump according to the first embodiment are shown in Table 1. Values of the hardness shown in Table 1 are obtained by carrying out evaluations based on Vickers hardness (Hv) under a test load of 25 g. The values of the hardness are described below as those based on the Vickers hardness (Hv). Further, the hardness of a copper-based sintered bearing for comparison was also shown as Comparative Example 1.

[Table 1]

|  | Measurement position | Hardness (Hv) | | |
|---|---|---|---|---|
| Example 1 | $\alpha$-phase | 120 | 135 | 140 |
|  | $\gamma$-phase | 200 | 210 | 220 |
| Comparative Example 1 | Bronze phase | 80 | 70 | 75 |

As shown in Table 1, the hardness of the copper-based sintered bearing is from 70 to 80, whereas the hardness of the sintered bearing for a fuel pump according to the first embodiment is, for example, from 120 to 220. From those results, it can be determined that the sintered bearing for a fuel pump according to the first embodiment is a sintered bearing that is more excellent in abrasion resistance than the copper-based sintered bearing. The reason for this is as follows. The hardness of the $\alpha$-phase that is a soft phase is from 120 to 140, and the hardness of the $\gamma$-phase that is a hard phase is from 200 to 220. Thus, the hardness of any phase of the sintered bearing for a fuel pump according to the first embodiment is higher than that of the copper-based sintered bearing.

From the test results shown in FIG. 4 to FIG. 8 and Table 1, it was confirmed that the sintered bearing for a fuel pump in which the blending amount of aluminum was from 8.5% by weight to 10% by weight was able to be used, and that the optimum blending amount of aluminum was from 9.0% by weight to 9.5% by weight.

Next, the method of manufacturing a sintered bearing for a fuel pump according to the first embodiment is described. A sintered bearing is manufactured through a raw material powder preparation step S1, a molding step S2, a sintering step S3, a sizing step S4, and an oil impregnation step S5 as illustrated in FIG. 9.

[Raw Material Powder Preparation Step S1]

In the raw material powder preparation step S1, raw material powder of the sintered bearing 1 is prepared and generated. The raw material powder was prepared and generated by adding a total of 0.05% by weight to 0.2% by weight of aluminum fluoride and calcium fluoride serving as the sintering aid, 3% by weight to 5% by weight of graphite powder, and 0.1% by weight to 1% by weight of a lubricant, such as zinc stearate or calcium stearate, for enhancing moldability with respect to a total of 100% by weight of 17% by weight to 20% by weight of aluminum (40% by weight to 60% by weight)-copper alloy powder, 2% by weight to 4% by weight of phosphorus (7% by weight to 10% by weight)-copper alloy powder, and the balance comprising electrolytic copper powder. By adding the lubricant, a green compact as described later can be released smoothly, and the deformation of the green compact due to the release can be prevented. Specifically, raw material powder M as described above is supplied to, for example, a can body 11 of a V-shaped mixer 10 illustrated in FIG. 10, and is homogeneously mixed by rotating the can body 11.

For example, the content of aluminum is set to, for example, 8.5% by weight or more and 10% by weight or less, specifically, 9% by weight or more and 9.5% by weight or less with respect to a total of 100% by weight (not comprising the graphite portion) of the alloy portion comprising 17% by weight to 20% by weight of aluminum (40% by weight to 60% by weight)-copper alloy powder, 2% by weight to 4% by weight of phosphorus (7% by weight to 10% by weight)-copper alloy powder, and the balance comprising electrolytic copper powder.

For example, the raw material powder can be used, which is obtained by adding a total of 0.05 part by weight to 0.2 part by weight of aluminum fluoride and calcium fluoride serving as the sintering aid, 3 parts by weight to 10 parts by weight, for example, 3 parts by weight to 5 parts by weight of graphite powder, and 0.1 part by weight to 1 part by weight of a lubricant, such as zinc stearate or calcium stearate, for enhancing moldability with respect to a total of 100 parts by weight of 17 parts by weight to 20 parts by weight of aluminum (40% by weight to 60% by weight)-copper alloy powder, 2 parts by weight to 4 parts by weight of phosphorus (7% by weight to 10% by weight)-copper alloy powder, and the balance comprising electrolytic copper powder.

For example, the content of aluminum is set to, for example, 8.5 parts by weight or more and 10 parts by weight or less, specifically, 9 parts by weight or more and 9.5 parts by weight or less with respect to a total of 100 parts by weight (not comprising the graphite portion) of the alloy portion comprising 17 parts by weight to 20 parts by weight of aluminum (40% by weight to 60% by weight)-copper alloy powder, 2 parts by weight to 4 parts by weight of phosphorus (7% by weight to 10% by weight)-copper alloy powder, and the balance comprising electrolytic copper powder.

[Molding Step S2]

In the molding step S2, the above-mentioned raw material powder is compressed to form a green compact 1' (see FIG. 13) having a shape of the sintered bearing 1. The green compact 1' is subjected to compression molding so that a sintered compact 1" to be formed by heating at a sintering temperature or more has a density ratio $\alpha$ of from 70% to 80%. In FIG. 13, for convenience, the green compact and the sintered compact are illustrated with reference numerals 1' and 1", respectively.

Specifically, for example, a mold having a cavity with a shape similar to that of a green compact is set on a CNC press machine using a servo motor as a drive source. The above-mentioned raw material powder filling the cavity is compressed with a pressurization force of from 200 MPa to 700 MPa to mold the green compact 1'. During molding of the green compact 1', the mold may be heated to 70°C or more.

In the method of manufacturing the sintered bearing 1 for a fuel pump according to this embodiment, the problem of shortage of strength of a green compact caused by decrease in moldability due to fluidity is solved by using aluminum-copper alloy powder as an aluminum source, and in this case, there arises no problem of handling due to scattering of aluminum simple substance particles having a small specific gravity. Further, the manufacturing method has good production efficiency and hence is suitable for mass production.

[Sintering Step S3]

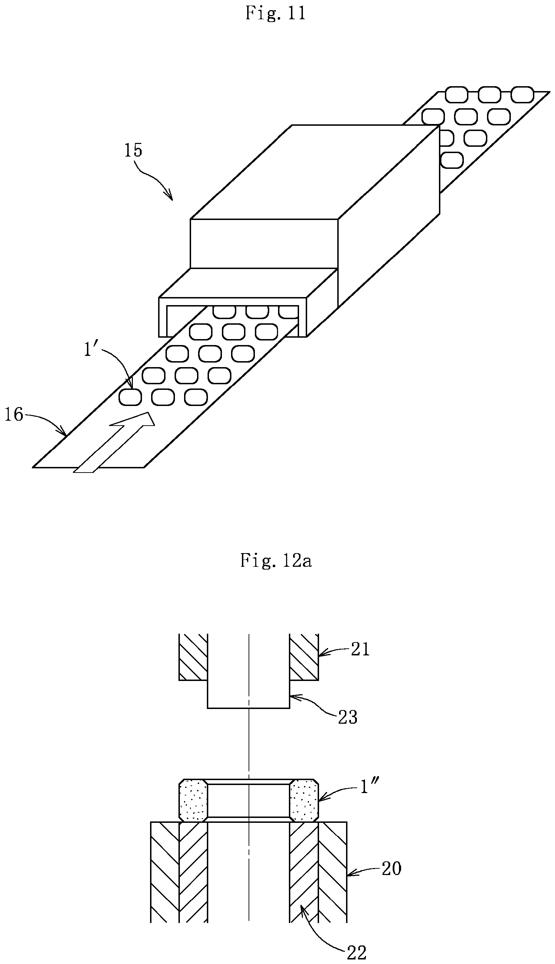

In the sintering step S3, the green compact 1' is heated at a sintering temperature and the raw material powders adjacent to each other are bound by sintering to form the sintered compact 1". Through use of a mesh-belt type continuous furnace 15 illustrated in FIG. 11, the green compact 1' is supplied in a large amount to a mesh belt 16 of the mesh-belt type continuous furnace 15, to thereby form the sintered compact 1". Thus, stable quality and manufacturing method can be realized.

What is important in the sintering step is to enhance corrosion resistance by sufficiently diffusing aluminum into copper, and to enhance corrosion resistance and bearing performance (initial conformability) by setting an aluminum bronze structure to the $\alpha$-phase. When the aluminum bronze structure is the $\gamma$-phase, although abrasion resistance is excellent by virtue of the increased hardness, organic acid corrosion resistance is degraded. Therefore, it was found necessary to reduce the amount of aluminum so as to minimize the precipitation of the γ-phase.

Further, it is preferred that, in the aluminum bronze structure, the ratio γ-phase/α-phase of the γ-phase and the α-phase be set to 0.10≤γ-phase/α-phase≤0.25. It is not preferred that the ratio γ-phase/α-phase be less than 0.10 because abrasion resistance is degraded. Meanwhile, it is not preferred that the ratio γ-phase/α-phase be more than 0.25 because initial conformability and organic acid corrosion resistance are degraded.

As the sintering condition satisfying the foregoing, the sintering temperature is preferably from 900°C to 950°C, more preferably from 900°C to 920°C (for example, 920°C). Further, as atmospheric gas, hydrogen gas, nitrogen gas, or mixed gas thereof is used. As the sintering time is longer, corrosion resistance becomes more satisfactory, and in a sintered bearing for a fuel pump, the sintering time is preferably from 20 minutes to 60 minutes (for example, 30 minutes).

The aluminum-copper alloy powder generates various liquid phases when the temperature is equal to or higher than 548°C as the eutectic temperature. When the liquid phases are generated, the aluminum-copper alloy powder expands, and a sintering neck is formed owing to the generated liquid phases, which leads to densification, resulting in reduction in dimensions. In this embodiment, as a result of the sintering in the mesh-belt type continuous furnace 15, the surface of the sintered compact 1" is oxidized, and the sintering thereof is inhibited. Therefore, the sintered compact 1" is not densified, and the dimensions thereof remain increased. Note that, the inside of the sintered compact 1" is sintered without being oxidized, and hence the strength of the sintered compact 1" can be ensured sufficiently. Owing to the use of the mesh-belt type continuous furnace 15, the sintering time from the supply of the green compact 1' to the release thereof can be shortened to mass-produce products, and cost can also be reduced. Further, from the viewpoint of the function of the sintered bearing, the strength can be ensured sufficiently.

In the sintering step, the added phosphorus alloy powder exhibits an effect so that a sintered compact of good quality can be formed. Phosphorus enhances wettability between a solid phase and a liquid phase during sintering, and hence a sintered compact of good quality can be obtained. It is preferred that the blending amount of phosphorus be from 0.1% by weight to 0.6% by weight, specifically 0.1% by weight to 0.4% by weight. When the blending amount of phosphorus is less than 0.1% by weight, the accelerating effect on the sintering between a solid phase and a liquid phase is unsatisfactory. On the other hand, when the blending amount of phosphorus is more than 0.6% by weight, preferably 0.4% by weight in the above description, a sintered compact to be obtained becomes brittle through segregation.

Further, graphite is present mainly as free graphite in pores dispersed and distributed in a substrate and contributes to the enhancement of abrasion resistance by imparting excellent lubricity to a sintered bearing. The blending amount of graphite is preferably from 3% by weight to 10% by weight and may be, for example, from 3% by weight to 5% by weight, with respect to a total of 100% by weight of aluminum, phosphorus, and the balance comprising copper as a main component, and inevitable impurities. When the blending amount of graphite is less than 3% by weight, the effects of enhancing lubricity and abrasion resistance through the addition of graphite are not attained in the sintered bearing for a fuel pump. Meanwhile, when the blending amount of graphite is more than 5% by weight, for example, there is a concern that the diffusion of aluminum into copper may start being inhibited. It is not preferred that the addition amount of graphite be more than 10% by weight because the material strength is decreased, and the diffusion of aluminum into copper is inhibited. In general, when 4% by weight or more of graphite is added, the resultant material cannot be molded. However, through use of granulated graphite, the material can be molded. In this embodiment, the graphite powder obtained by granulating and pulverizing fine powder of natural graphite or artificial graphite with a resin binder to a grain diameter of 145 mesh or less was used.

[Sizing Step S4]

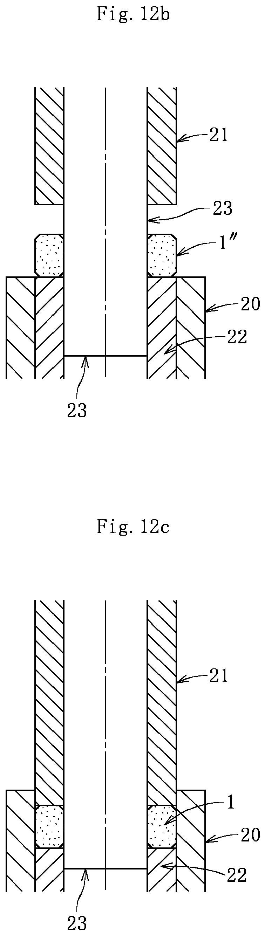

In the sizing step S4, the sintered compact 1" that has expanded by sintering compared to the green compact 1' is subjected to dimension shaping. FIGS. 12 are illustrations of the details of the sizing step S4. A mold for sizing processing comprises a die 20, an upper punch 21, a lower punch 22, and a core 23. As illustrated in FIG. 12a, the sintered compact 1" is set on the lower punch 22 while the core 23 and the upper punch 21 are retreated upward. As illustrated in FIG. 12b, first, the core 23 enters a radially inner portion of the sintered compact 1". Then, as illustrated in FIG. 12c, the sintered compact 1" is pushed into the die 20 by the upper punch 21. After that, the sintered compact 1" is compressed with the upper and lower punches 21 and 22. As a result, the surface of the sintered compact 1" is subjected to dimension shaping. Pores in the surface layer of the expanded sintered compact 1" are crushed by sizing processing to cause a density difference between the inside of the product and the surface layer portion.

FIG. 13 is an illustration of a state in which the sintered compact 1" is compressed by sizing processing. The sintered compact 1" before sizing processing is indicated by the two-dot chain line, and a product 1 after sizing processing is indicated by the solid line. As indicated by the two-dot chain line, the sintered compact 1" has expanded in a radial direction and a width direction. Therefore, the radially outer surface 1b of the sintered compact 1" is compressed more than the bearing surface 1a on the radially inner side. As a result, the pore do (see FIG. 3c) in the surface layer on the radially outer surface 1b side is crushed more than the pore db (see FIG. 3a) in the surface layer of the bearing surface 1a on the radially inner side, and a relationship of do<db<di is satisfied with respect to the pore di (see FIG. 3b) in the bearing that is not crushed. By virtue of such relationship, in the bearing surface 1a on the radially inner side, corrosion resistance and oil film formation property can be enhanced. On the other hand, in the radially outer surface 1b and the end surface 1c close to a closed state, corrosion resistance and oil retaining property can be enhanced.

The mold used during the above-mentioned sizing step comprises the die 20, a pair of the punches 21 and 22, and the core 23, and the radially inner side of the sintered compact 1" is shaped with the core 23 by compressing the sintered compact 1" from both sides in the axial direction and the radially outer side with the punches 21 and 22 and the die 20. Thus, the sintered bearing 1 can be subjected to dimension shaping and desired pores can be formed through effective use of the expansion of an aluminum bronze-based sintered bearing by sintering.

Further, the size of each pore on the surface of the sintered compact 1" can be set by adjusting a dimension difference between the inner diameter dimension of the die 20 and the outer diameter dimension of the sintered compact 1" and a dimension difference between the outer diameter dimension of the core 23 and the inner diameter dimension of the sintered compact 1". Thus, the size of each pore on the surface of the sintered bearing 1 can be controlled easily. Further, although not shown, the pores of the bearing surface 1a can be reduced in size by subjecting the bearing surface 1a (see FIG. 13) to rotation sizing.

[Oil Impregnation Step S5]

The oil impregnation step S5 is the step of impregnating the product 1 (sintered bearing) with lubricating oil. FIG. 14 is an illustration of an oil impregnation device. The product 1 is put in a tank 26 of the oil impregnation device 25, and then lubricating oil 27 is poured into the tank 26. The inside of the tank 26 is reduced in pressure to impregnate the pores do, db, and di (see FIGS. 3) of the product 1 with the lubricating oil 27. Thus, a satisfactory lubrication state can be obtained from the beginning of an operation. As the lubricating oil, mineral oil, poly-$\alpha$-olefin (PAO), an ester, liquid grease, or the like can be used. Note that, it is appropriate that the pores do, db, and di be impregnated with lubricating oil depending on the use purpose of a bearing, and this impregnation is not necessarily required.

The sintered bearing 1 according to this embodiment manufactured through the above-mentioned steps has enhanced corrosion resistance, mechanical characteristics such as strength and abrasion resistance, oil film formation property, and oil retaining property, and can also achieve compactness and reduction in cost. As a sintered bearing for a fuel pump, the sintered bearing 1 according to this embodiment suppresses the sulfidation corrosion caused by gasoline of inferior quality and the corrosion caused by organic acid and biofuel, and is excellent in performance, such as initial conformability and durability.

Next, a sintered bearing for a fuel pump according to a second embodiment of the present invention and a method of manufacturing the sintered bearing according to the second embodiment of the present invention are described. In the sintered bearing for a fuel pump and the method of manufacturing the sintered bearing according to the first embodiment, aluminum-copper alloy powder and electrolytic copper powder are used as the raw material powder serving as an aluminum source and a copper source. However, the second embodiment is different from the first embodiment in that aluminum-copper alloy powder is used without adding electrolytic copper powder of a copper simple substance.

It was found that when powder of a copper simple substance was added under severer use environment, a portion in which the copper simple substance was concentrated was formed to cause a problem in corrosion resistance. As a result of conducting various investigations based on the above-mentioned finding, this embodiment was attained through the idea of using aluminum-copper alloy powder as the raw material powder serving as an aluminum source and a copper source without adding powder of a copper simple substance.

The composition comprising 8.5% by weight to 10% by weight of aluminum, 0.1% by weight to 0.4% by weight of phosphorus, and the balance comprising copper as a main component in the sintered bearing for a fuel pump and the method of manufacturing the sintered bearing according to this embodiment is the same as that of the first embodiment. However, the raw material powder is different as follows. Specifically, the raw material powder was obtained by mixing aluminum-copper alloy powder and phosphorus alloy powder at such a ratio that the above-mentioned composition was obtained without adding electrolytic copper powder of a copper simple substance and mixing graphite powder with respect to a total of 100% by weight of the above-mentioned mixture so that the blending amount of graphite was from 3% by weight to 5% by weight. Further, as the sintering aid, a total of 0.05% by weight to 0.2% by weight of aluminum fluoride and calcium fluoride was added, and 0.1% by weight to 1% by weight of zinc stearate was added so as to enhance moldability.

For example, in the sintered bearing for a fuel pump and the method of manufacturing the sintered bearing, the composition comprising 8.5 parts by weight to 10 parts by weight of aluminum, 0.1 part by weight to 0.4 part by weight of phosphorus, 3 parts by weight to 10 parts by weight, for example, 3 parts by weight to 5 parts by weight of graphite as necessary, and the balance comprising copper as a main component can be used. In this case, for example, the raw material powder is as follows. Specifically, the raw material powder was obtained by mixing aluminum-copper alloy powder and phosphorus alloy powder at such a ratio that the above-mentioned composition was obtained without adding electrolytic copper powder of a copper simple substance and mixing graphite powder with respect to a total of 100 parts by weight of the above-mentioned mixture so that the blending amount of graphite was from 3 parts by weight to 10 parts by weight, for example, from 3 parts by weight to 5 parts by weight. The blending amount of graphite is preferably from 3 parts by weight to 10 parts by weight and may be, for example, from 3 parts by weight to 5 parts by weight, with respect to a total of 100 parts by weight of the raw material powder comprising aluminum, phosphorus, and the balance comprising copper as a main component, and the inevitable impurities. When the blending amount of graphite is less than 3 parts by weight, the effects of enhancing lubricity and abrasion resistance through the addition of graphite are not attained in the sintered bearing for a fuel pump. Meanwhile, when the blending amount of graphite is more than 5 parts by weight, for example, there is a concern that the diffusion of aluminum into copper may start being inhibited. It is not preferred that the addition amount of graphite be more than 10 parts by weight because the material strength is decreased, and the diffusion of aluminum into copper is inhibited. In general, when 4 parts by weight or more of graphite is added, the resultant material cannot be molded. However, through use of granulated graphite, the material can be molded. In this embodiment, graphite powder obtained by granulating and pulverizing fine powder of natural graphite or artificial graphite with a resin binder to a grain diameter of 145 mesh or less was used. Further, as the sintering aid, a total of 0.05 part by weight to 0.2 part by weight of aluminum fluoride and calcium fluoride was added, and 0.1 part by weight to 1 part by weight of zinc stearate was further added so as to enhance moldability.

In the aluminum bronze structure according to this embodiment that uses aluminum-copper alloy powder as a copper source without adding powder of a copper simple substance, it is preferred that the ratio $\gamma$-phase/$\alpha$-phase of the $\gamma$-phase and the $\alpha$-phase be 0<$\gamma$-phase/$\alpha$-phase≤0.10. When the ratio $\gamma$-phase/$\alpha$-phase falls within the range of 0<$\gamma$-phase/$\alpha$-phase≤0.10, organic acid corrosion resistance and initial conformability become excellent.

The metal structure of a cross-section of the sintered bearing according to this embodiment is the same as that of the first embodiment illustrated in the schematic view of FIGS. 3. Therefore, the details described above with reference to FIGS. 3 are applied hereto, and the repeated descriptions are omitted.

Further, the state of the compressed layer of the surface layer of the sintered bearing 1 according to this embodiment is also the same as that of the sintered bearing according to the first embodiment illustrated in FIG. 2. Therefore, the details described with reference to FIG. 2 are applied hereto, and the repeated descriptions are omitted.

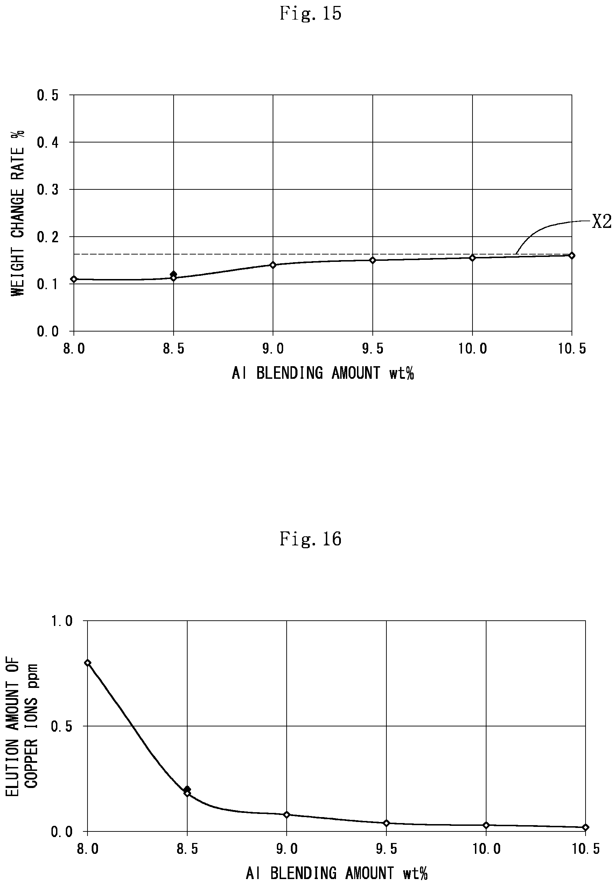

Next, the results of verification for achieving this embodiment are described with reference to FIG. 15 and FIG. 16. The broken line X2 of FIG. 15 indicates an allowable level of a test item. Although not shown, regarding the relationship between the blending amount of aluminum and the sulfidation corrosivity, better results were confirmed in the sintered bearing according to the second embodiment than in the sintered bearing according to the first embodiment. Further, regarding the relationship between the blending amount of aluminum and each of the initial conformability time and the friction coefficient, the test results of the sintered bearing according to the first embodiment and the test results of the sintered bearing according to the second embodiment are substantially equal to each other, and hence the detailed descriptions thereof are omitted herein.

FIG. 15 is a graph for showing results obtained by testing a relationship between the blending amount of aluminum and the organic acid corrosivity. The test conditions are the same as those of FIG. 5. In FIG. 15, the symbol ♦ indicates the test results of the sintered bearing according to the first embodiment shown in FIG. 5. It was confirmed that organic acid corrosion resistance of the sintered bearing according to this embodiment indicated by the symbol ◊ was further enhanced at the blending amount of aluminum of 8.5% by weight compared to that of the first embodiment. The reason for this is considered as follows. Aluminum-copper alloy powder was used as the raw material powder serving as an aluminum source and a copper source without adding powder of a copper simple substance, and hence a portion in which the copper simple substance was concentrated did not substantially exist and the occurrence of corrosion due to such portion was avoided, with the result that corrosion resistance was enhanced. In addition, through use of aluminum-copper alloy powder, corrosion resistance of each grain of aluminum-copper alloy powder was enhanced so that corrosion resistance of the entire sintered bearing was enhanced.

FIG. 16 is a graph for showing results obtained by testing a relationship between the blending amount of aluminum and the elution amount of copper ions. The test conditions are the same as those of FIG. 6. Also in FIG. 16, the symbol ♦ indicates the test results of the sintered bearing according to the first embodiment shown in FIG. 6. It was confirmed that the elution amount of copper ions of the sintered bearing according to this embodiment indicated by the symbol ◊ was reduced at the blending amount of aluminum of 8.5% by weight compared to that of the first embodiment.

The results obtained by measuring the hardness of the sintered bearing for a fuel pump according to the second embodiment are shown in Table 2. The method of evaluating the hardness shown in Table 2 and the like are the same as the method of evaluating the hardness shown in Table 1 and the like, and hence the detailed descriptions thereof are omitted herein.

[Table 2]

| | Measurement position | Hardness (Hv) | | |
|---|---|---|---|---|
| Example 2 | $\alpha$-phase | 100 | 120 | 140 |
| | $\gamma$-phase | 200 | 220 | 240 |
| Comparative Example 1 | Bronze phase | 80 | 70 | 75 |

As shown in Table 2, the hardness of the copper-based sintered bearing is from 70 to 80, whereas the hardness of the sintered bearing for a fuel pump according to the second embodiment is, for example, from 100 to 240. From those results, it can be determined that the sintered bearing for a fuel pump according to the second embodiment is a sintered bearing that is more excellent in abrasion resistance than the copper-based sintered bearing. The reason for this is as follows. The hardness of the $\alpha$-phase that is a soft phase is from 100 to 140, and the hardness of the $\gamma$-phase that is a hard phase is from 200 to 240. Thus, the hardness of any phase of the sintered bearing for a fuel pump according to the second embodiment is higher than that of the copper-based sintered bearing.

From the test results shown in FIG. 15, FIG. 16, and Table 2, it was confirmed that the sintered bearing for a fuel pump according to this embodiment was able to ensure corrosion resistance even under severer use environment.

Next, the manufacturing method according to the second embodiment is described. The manufacturing method according to the second embodiment is also the same as the method of manufacturing a sintered bearing according to the first embodiment illustrated in FIG. 9. Therefore, the details described above are applied hereto, and only the differences in the raw material powder preparation step S1 and the molding step S2 are described.

[Raw Material Powder Preparation Step S1]

In the raw material powder preparation step S1, raw material powder of the sintered bearing 1 is prepared. The raw material powder was prepared by adding 3% by weight to 5% by weight of graphite powder, a total of 0.05% by weight to 0.2% by weight of aluminum fluoride and calcium fluoride serving as the sintering aid, and 0.1% by weight to 1% by weight of a lubricant, such as zinc stearate, for enhancing moldability with respect to a total of 100% by weight of 90% by weight to 97% by weight of aluminum (7% by weight to 11% by weight)-copper alloy powder, preferably, aluminum (8% by weight to 10% by weight)-copper alloy powder, and 1% by weight to 6% by weight of phosphorus (7% by weight to 10% by weight)-copper alloy powder. The aluminum (7% by weight to 11% by weight)-copper alloy powder was pulverized to adjust a grain size thereof. In the same way as in the first embodiment, the above-mentioned raw material powder is supplied to, for example, the can body 11 of the V-shaped mixer 10 illustrated in FIG. 10, and is homogeneously mixed by rotating the can body 11.

For example, the content of aluminum is set to, for example, 8.5% by weight or more and 10% by weight or less, specifically, 9% by weight or more and 9.5% by weight or less with respect to a total of 100% by weight (not comprising the graphite portion) of the alloy portion comprising 90% by weight to 97% by weight of aluminum (7% by weight to 11% by weight)-copper alloy powder and 1% by weight to 6% by weight of phosphorus (7% by weight to 10% by weight)-copper alloy powder.

For example, the raw material powder can be used, which is obtained by adding 3 parts by weight to 10 parts by weight, for example, 3 parts by weight to 5 parts by weight of graphite powder, a total of 0.05 part by weight to 0.2 part by weight of aluminum fluoride and calcium fluoride serving as the sintering aid, and 0.1 part by weight to 1 part by weight of a lubricant, such as zinc stearate, for enhancing moldability with respect to a total of 100 parts by weight of 90 parts by weight to 97 parts by weight of aluminum (7% by weight to 11% by weight)-copper alloy powder, preferably, aluminum (8% by weight to 10% by weight)-copper alloy powder, and 1 part by weight to 6 parts by weight of phosphorus (7% by weight to 10% by weight)-copper alloy powder.

For example, the content of aluminum is set to, for example, 8.5 parts by weight or more and 10 parts by weight or less, specifically, 9 parts by weight or more and 9.5 parts by weight or less with respect to a total of 100 parts by weight (not comprising the graphite portion) of the alloy portion comprising 90 parts by weight to 97 parts by weight of aluminum (7% by weight to 11% by weight)-copper alloy powder and 1 part by weight to 6 parts by weight of phosphorus (7% by weight to 10% by weight)-copper alloy powder.

[Molding Step S2]

In the molding step S2, the above-mentioned raw material powder is compressed to form a green compact 1' (see FIG. 13) having a shape of the sintered bearing 1. In this embodiment, aluminum-copper alloy powder is used as the raw material powder serving as an aluminum source and a copper source without adding powder of a copper simple substance, and hence a portion in which the copper simple substance is concentrated does not substantially exist and the occurrence of corrosion due to such portion is avoided, with the result that corrosion resistance is enhanced. In addition, through use of aluminum-copper alloy powder, corrosion resistance of each grain of aluminum-copper alloy powder is enhanced so that corrosion resistance of the entire sintered bearing for a fuel pump is enhanced.

In the sintered bearing for a fuel pump manufactured by the manufacturing method according to this embodiment, corrosion resistance can be ensured even under particularly severe use environment. Further, in the same way as in the sintered bearing according to the first embodiment, mechanical characteristics such as strength and abrasion resistance, oil film formation property, and oil retaining property can be enhanced, and compactness and reduction in cost can be realized.

In the above description of each embodiment, the case where the present invention is applied to a perfect circular bearing having the bearing surface 1a in a perfect circle shape has been illustrated. However, the present invention can be similarly applied to a fluid dynamic bearing in which a dynamic pressure generating portion such as a herring-bone groove or a spiral groove is provided on the bearing surface 1a and an outer peripheral surface of the shaft 52, as well as the perfect circular bearing.

As the sintered bearing according to this embodiment, depending on the type of a fuel pump and the like, various sintered bearings for a fuel pump, for example, a sintered bearing for a fuel pump not comprising oils, such as lubricating oil, a sintered bearing for a fuel pump comprising a small amount of lubricating oil, and a sintered bearing for a fuel pump sufficiently comprising lubricating oil can be used.

The present invention is not limited to the above-mentioned embodiments. As a matter of course, various modifications can be made thereto without departing from the present invention. The scope of the present invention is defined in the claims.

DESCRIPTION OF REFERENCE SIGNS

| | |
|---|---|
| 1 | sintered bearing for fuel pump |
| 1' | green compact |
| 1" | sintered compact |
| 1a | bearing surface |
| 1b | radially outer surface |
| 1c | end surface |
| 2 | sintered bearing for fuel pump |
| 3 | aluminum-copper alloy structure |
| 4 | aluminum oxide film |
| 5 | free graphite |
| 15 | mesh-belt type continuous furnace |
| 20 | die |
| 21 | upper punch |
| 22 | lower punch |
| 23 | core |
| 40 | fuel pump |
| 52 | shaft |
| D1 | inner diameter dimension of bearing surface |
| db | pore |
| di | pore |
| do | pore |
| Pb | compressed layer |
| Po | compressed layer |

**Claims**

1. A sintered bearing for a motor-type fuel pump, comprising raw material powder comprising 8.5% by weight to 10% by weight of aluminum, 0.1% by weight to 0.6% by weight of phosphorus, and the balance comprising copper as a main component, and inevitable impurities, the sintered bearing having a structure of a sintered aluminum-copper alloy, **characterised by** the sintered bearing having a pore formed in a surface layer portion of the sintered bearing, the pore being smaller in size than an internal pore of the sintered bearing, a ratio $\gamma$-phase/$\alpha$-phase in the structure of the sintered aluminum-copper alloy being set to $0.10 \leq \gamma$-phase/$\alpha$-phase $\leq 0.25$.

2. A sintered bearing for a motor-type fuel pump, comprising raw material powder comprising 8.5% by weight to 10% by weight of aluminum, 0.1% by weight to 0.6% by weight of phosphorus, and the balance comprising copper as a main component, and inevitable impurities, **characterised by** the sintered bearing having a structure of a sintered aluminum-copper alloy sintering without using powder of a copper simple substance as a copper source, the sintered bearing having a pore formed in a surface layer portion of the sintered bearing, the pore being smaller in size than an internal pore of the sintered bearing.

3. The sintered bearing for a motor-type fuel pump according to claim 2, wherein a ratio $\gamma$-phase/$\alpha$-phase of the structure of the sintered aluminum-copper alloy is set to $0<\gamma$-phase/$\alpha$-phase$\leq0.10$.

4. The sintered bearing for a motor-type fuel pump according to any one of claims 1 to 3, wherein the sintered bearing has added thereto 3% by weight to 10% by weight of graphite with respect to a total of 100% by weight of the raw material powder comprising the aluminum, the phosphorus, and the balance comprising the copper as the main component, and the inevitable impurities.

5. The sintered bearing for a motor-type fuel pump according to any one of claims 1 to 4, wherein the sintered bearing for a motor-type fuel pump is free of tin to be added as a sintering aid.

6. The sintered bearing for a motor-type fuel pump according to any one of claims 1 to 5, wherein a content of the aluminum is set to from 9% by weight to 9.5% by weight.

7. A method of manufacturing a sintered bearing for a fuel pump,

   the sintered bearing comprising raw material powder comprising 8.5% by weight to 10% by weight of aluminum, 0.1% by weight to 0.6% by weight of phosphorus, and the balance comprising copper as a main component, and inevitable impurities,
   the method using aluminum-copper alloy powder, electrolytic copper powder, and phosphorus-copper alloy powder as the raw material powder,
   the method comprising at least:

   a molding step of molding a green compact having a sintering aid added to the raw material powder;
   a sintering step of obtaining, from the green compact, a sintered compact having a structure of a sintered aluminum-copper alloy and having a ratio $\gamma$-phase/$\alpha$-phase in the structure of the sintered aluminum-copper alloy of $0.10 \leq \gamma$-phase/$\alpha$-phase $\leq 0.25$; and
   a sizing step of subjecting the sintered compact to dimension shaping.

8. The method of manufacturing a sintered bearing for a fuel pump according to claim 7, wherein the sintered bearing has added thereto, as the sintering aid, a total of 0.05% by weight to 0.2% by weight of aluminum fluoride and calcium fluoride with respect to a total of 100% by weight of the raw material powder comprising the aluminum-copper alloy powder, the electrolytic copper powder, and the phosphorus-copper alloy powder.

9. The method of manufacturing a sintered bearing for a fuel pump according to claim 7 or 8, wherein a ratio d2/d1 of a mean grain diameter d1 of the aluminum-copper alloy powder and a mean grain diameter d2 of the electrolytic copper powder is set to from 2 to 3.

10. The method of manufacturing a sintered bearing for a fuel pump according to any one of claims 7 to 9,
    wherein the electrolytic copper powder comprises powders having different shapes, and
    wherein a ratio W2/W1 of a proportion W1 of the electrolytic copper powder having an aspect ratio of 2 or more and a proportion W2 of the electrolytic copper powder having an aspect ratio of less than 2 is set to from 3 to 9.

11. A method of manufacturing a sintered bearing for a fuel pump,
    the sintered bearing comprising raw material powder comprising 8.5% by weight to 10% by weight of aluminum, 0.1% by weight to 0.6% by weight of phosphorus, and the balance comprising copper as a main component, and inevitable impurities,
    the method using aluminum-copper alloy powder and phosphorus-copper alloy powder as the raw material powder without adding powder of a copper simple substance to the raw material powder,

the method comprising at least:

a molding step of molding a green compact having a sintering aid added to the raw material powder;
a sintering step of obtaining, from the green compact, a sintered compact having a structure of an aluminum-copper alloy; and
a sizing step of subjecting the sintered compact to dimension shaping.

12. The method of manufacturing a sintered bearing for a fuel pump according to claim 11, wherein the aluminum-copper alloy powder serving as the raw material powder comprises aluminum (7% by weight to 11% by weight)-copper alloy powder.

13. The method of manufacturing a sintered bearing for a fuel pump according to claim 11, wherein a ratio $\gamma$-phase/$\alpha$-phase in the structure of the sintered aluminum-copper alloy is set to $0 < \gamma$-phase/$\alpha$-phase $\leq 0.10$.

**Patentansprüche**

1. Gesintertes Lager für eine motorartige Kraftstoffpumpe, das Ausgangsmaterialpulver umfasst, das 8,5 Gewichts-% bis 10 Gewichts-% Aluminium, 0,1 Gewichts-% bis 0,6 Gewichts-% Phosphor und den Rest, der Kupfer als eine Hauptkomponente umfasst, und unvermeidbare Verunreinigungen umfasst,
wobei das gesinterte Lager eine Struktur aus einer gesinterten Aluminium-Kupfer-Legierung aufweist,
**dadurch gekennzeichnet, dass**
das gesinterte Lager eine Pore aufweist, die in einem Oberflächenschichtabschnitt des gesinterten Lagers ausgebildet ist, wobei die Pore eine geringere Größe als eine Innenpore des gesinterten Lagers aufweist, wobei ein $\gamma$-Phase/$\alpha$-Phase-Verhältnis in der Struktur aus der gesinterten Aluminium-Kupfer-Legierung auf $0,10 \leq \gamma$-Phase/$\alpha$-Phase $\leq 0,25$ festgelegt ist.

2. Gesintertes Lager für eine motorartige Kraftstoffpumpe, das Ausgangsmaterialpulver umfasst, das 8,5 Gewichts-% bis 10 Gewichts-% Aluminium, 0,1 Gewichts-% bis 0,6 Gewichts-% Phosphor und den Rest, der Kupfer als eine Hauptkomponente umfasst, und unvermeidbare Verunreinigungen umfasst,
**dadurch gekennzeichnet, dass**
das gesinterte Lager eine Struktur aus einer gesinterten Aluminium-Kupfer-Legierung aufweist, wobei Sintern ohne Verwendung eines Pulvers aus einem Kupfer(I)-Stoff als eine Kupferquelle erfolgt,
das gesinterte Lager eine Pore aufweist, die in einem Oberflächenschichtabschnitt des gesinterten Lagers ausgebildet ist, wobei die Pore eine geringere Größe als eine Innenpore des gesinterten Lagers aufweist.

3. Gesintertes Lager für eine motorartige Kraftstoffpumpe nach Anspruch 2, wobei ein $\gamma$-Phase/$\alpha$-Phase-Verhältnis der Struktur aus der gesinterten Aluminium-Kupfer-Legierung auf $0 < \gamma$-Phase/$\alpha$-Phase $\leq 0,10$ festgelegt ist.

4. Gesintertes Lager für eine motorartige Kraftstoffpumpe nach einem der Ansprüche 1 bis 3, wobei zu dem gesinterten Lager 3 Gewichts-% bis 10 Gewichts-% Graphit in Bezug auf insgesamt 100 Gewichts-% des Ausgangsmaterialpulvers hinzugegeben ist, welches das Aluminium, den Phosphor und den Rest, der das Kupfer als die Hauptkomponente umfasst, und die unvermeidbaren Verunreinigungen umfasst.

5. Gesintertes Lager für eine motorartige Kraftstoffpumpe nach einem der Ansprüche 1 bis 4, wobei das gesinterte Lager für eine motorartige Kraftstoffpumpe frei von Zinn ist, das als ein Sinterhilfsstoff hinzuzugeben ist.

6. Gesintertes Lager für eine motorartige Kraftstoffpumpe nach einem der Ansprüche 1 bis 5, wobei ein Gehalt des Aluminiums auf von 9 Gewichts-% bis 9,5 Gewichts-% festgelegt ist.

7. Verfahren zum Herstellen eines gesinterten Lagers für eine Kraftstoffpumpe,
wobei das gesinterte Lager Ausgangsmaterialpulver umfasst, das 8,5 Gewichts-% bis 10 Gewichts-% Aluminium, 0,1 Gewichts-% bis 0,6 Gewichts-% Phosphor und den Rest, der Kupfer als eine Hauptkomponente umfasst, und unvermeidbare Verunreinigungen umfasst,
wobei das Verfahren Aluminium-Kupfer-Legierungspulver, elektrolytisches Kupferpulver und Phosphor-Kupfer-Legierungspulvers als das Ausgangsmaterialpulver verwendet,
wobei das Verfahren mindestens Folgendes umfasst:

einen Formschritt zum Formen eines Grünlings mit einem Sinterhilfsstoff, der zu dem Ausgangsmaterialpulver hinzugegeben wird;

einen Sinterschritt zum Erhalten, aus dem Grünling, eines gesinterten Presslings mit einer Struktur aus einer gesinterten Aluminium-Kupfer-Legierung und mit einem $\gamma$-Phase/$\alpha$-Phase-Verhältnis in der Struktur aus der gesinterten Aluminium-Kupfer-Legierung von $0{,}10 \leq \gamma$-Phase/$\alpha$-Phase $\leq 0{,}25$; und

einen Dimensionierschritt zum Unterziehen des gesinterten Presslings der Dimensionsmodellierung.

8. Verfahren zum Herstellen eines gesinterten Lagers für eine Kraftstoffpumpe nach Anspruch 7, wobei zu dem gesinterten Lager insgesamt 0,05 Gewichts-% bis 0,2 Gewichts-% Aluminiumfluorid und Calciumfluorid in Bezug auf 100 Gewichts-% des Ausgangsmaterialpulvers, welches das Aluminium-Kupfer-Legierungspulver, das elektrolytische Kupferpulver und das Phosphor-Kupfer-Legierungspulver umfasst, als der Sinterhilfsstoff hinzugegeben wird.

9. Verfahren zum Herstellen eines gesinterten Lagers für eine Kraftstoffpumpe nach Anspruch 7 oder 8, wobei ein d2/d1-Verhältnis eines mittleren Korndurchmessers d1 des Aluminium-Kupfer-Legierungspulvers und eines mittleren Korndurchmessers d2 des elektrolytischen Kupferpulvers auf von 2 bis 3 festgelegt ist.

10. Verfahren zum Herstellen eines gesinterten Lagers für eine Kraftstoffpumpe nach einem der Ansprüche 7 bis 9, wobei das elektrolytische Kupferpulver Pulver mit unterschiedlichen Formen umfasst, und

wobei ein W2/W1-Verhältnis eines Anteils W1 des elektrolytischen Kupferpulvers mit einem Aspektverhältnis von 2 oder mehr und eines Anteils W2 des elektrolytischen Kupferpulvers mit einem Aspektverhältnis von weniger als 2 auf von 3 bis 9 festgelegt ist.

11. Verfahren zum Herstellen eines gesinterten Lagers für eine Kraftstoffpumpe,

wobei das gesinterte Lager Ausgangsmaterialpulver umfasst, das 8,5 Gewichts-% bis 10 Gewichts-% Aluminium, 0,1 Gewichts-% bis 0,6 Gewichts-% Phosphor und den Rest, der Kupfer als eine Hauptkomponente umfasst, und unvermeidbare Verunreinigungen umfasst,

wobei das Verfahren Aluminium-Kupfer-Legierungspulver und Phosphor-Kupfer-Legierungspulver als das Ausgangsmaterialpulver ohne Hinzugeben eines Kupfer(I)-Stoffs zu dem Ausgangsmaterialpulver verwendet,

wobei das Verfahren mindestens Folgendes umfasst:

einen Formschritt zum Formen eines Grünlings mit einem Sinterhilfsstoff, der zu dem Ausgangsmaterialpulver hinzugegeben wird;

einen Sinterschritt zum Erhalten, aus dem Grünling, eines gesinterten Presslings mit einer Struktur aus einer Aluminium-Kupfer-Legierung; und

einen Dimensionierschritt zum Unterziehen des gesinterten Presslings der Dimensionsmodellierung.

12. Verfahren zum Herstellen eines gesinterten Lagers für eine Kraftstoffpumpe nach Anspruch 11, wobei das Aluminium-Kupfer-Legierungspulver, das als das Ausgangsmaterialpulver dient, Aluminium(7 Gewichts-% bis 11 Gewichts-%)-Kupfer-Legierungspulver umfasst.

13. Verfahren zum Herstellen eines gesinterten Lagers für eine Kraftstoffpumpe nach Anspruch 11, wobei ein $\gamma$-Phase/$\alpha$-Phase-Verhältnis in der Struktur aus der gesinterten Aluminium-Kupfer-Legierung auf $0 < \gamma$-Phase/$\alpha$-Phase $\leq 0{,}10$ festgelegt ist.

## Revendications

1. Palier fritté pour une pompe à carburant de type à moteur, comprenant une matière première sous forme de poudre comprenant de 8,5 % en poids à 10 % en poids d'aluminium, de 0,1% en poids à 0,6 % en poids de phosphore, et le reste comprenant du cuivre en tant que composant principal, et des impuretés inévitables, le palier fritté ayant une structure d'un alliage d'aluminium-cuivre fritté, **caractérisé en ce que**

le palier fritté a un pore formé dans une partie de couche de surface du palier fritté, le pore étant plus petit en taille qu'un pore interne du palier fritté,

un rapport phase $\gamma$/phase $\alpha$ dans la structure de l'alliage d'aluminium-cuivre fritté est fixé de telle manière que $0{,}10 \leq$ phase $\gamma$/phase $\alpha \leq 0{,}25$.

2. Palier fritté pour une pompe à carburant de type moteur, comprenant une matière première sous forme de poudre comprenant de 8,5 % en poids à 10 % en poids d'aluminium, de 0,1 % en poids à 0,6 % en poids de phosphore, et le reste comprenant du cuivre en tant que composant principal, et des impuretés inévitables, **caractérisé en ce que** le palier fritté ayant une structure d'un alliage d'aluminium-cuivre fritté se frittant sans utiliser de poudre d'une substance simple à base de cuivre en tant que source de cuivre,

le palier fritté ayant un pore formé dans une partie de couche de surface du palier fritté, le pore étant plus petit en taille qu'un pore interne du palier fritté.

3. Palier fritté pour une pompe à carburant de type moteur selon la revendication 2, dans lequel un rapport phase $\gamma$/phase $\alpha$ de la structure de l'alliage d'aluminium-cuivre fritté est fixé de telle manière que 0 < phase $\gamma$/phase $\alpha \leq 0{,}10$.

4. Palier fritté pour une pompe à carburant de type à moteur selon l'une quelconque des revendications 1 à 3, dans lequel le palier fritté comprend par ailleurs de 3 % en poids à 10 % en poids de graphite par rapport à un total de 100 % en poids de la matière première sous forme de poudre comprenant l'aluminium, le phosphore, et le reste comprenant le cuivre en tant que composant principal, et les impuretés inévitables.

5. Palier fritté pour une pompe à carburant de type à moteur selon l'une quelconque des revendications 1 à 4, dans lequel le palier fritté pour une pompe à carburant de type moteur est exempt d'étain devant être ajouté en tant qu'auxiliaire de frittage.

6. Palier fritté pour une pompe à carburant de type à moteur selon l'une quelconque des revendications 1 à 5, dans lequel une teneur de l'aluminium est fixée de 9 % en poids à 9,5 % en poids.

7. Procédé de fabrication d'un palier fritté pour une pompe à carburant,

le palier fritté comprenant une matière première sous forme de poudre comprenant de 8,5 % en poids à 10 % en poids d'aluminium, de 0,1 % en poids à 0,6 % en poids de phosphore, et le reste comprenant du cuivre en tant que composant principal, et des impuretés inévitables,

le procédé utilisant une poudre d'alliage d'aluminium-cuivre, une poudre de cuivre électrolytique et une poudre d'alliage de phosphore-cuivre en tant que matière première sous forme de poudre,

le procédé comprenant au moins :

une étape de moulage consistant à mouler une préforme comprimée ayant un auxiliaire de frittage ajouté à la matière première sous forme de poudre ;

une étape de frittage consistant à obtenir, à partir de la préforme comprimée, un comprimé fritté ayant une structure d'un alliage d'aluminium-cuivre fritté et ayant un rapport phase $\gamma$/phase $\alpha$ dans la structure de l'alliage d'aluminium-cuivre fritté de $0{,}10 \leq$ phase $\gamma$/phase $\alpha \leq 0{,}25$ ; et

une étape de dimensionnement consistant à soumettre le comprimé fritté à une mise en forme dimensionnelle.

8. Procédé de fabrication d'un palier fritté pour une pompe à carburant selon la revendication 7, dans lequel le palier fritté comprend par ailleurs, en tant qu'auxiliaire de frittage, un total de 0,05 % en poids à 0,2 % en poids de fluorure d'aluminium et de fluorure de calcium par rapport à un total de 100 % en poids de la matière première sous forme de poudre comprenant la poudre d'alliage d'aluminium-cuivre, la poudre de cuivre électrolytique, et la poudre d'alliage de phosphore-cuivre.

9. Procédé de fabrication d'un palier fritté pour une pompe à carburant selon la revendication 7 ou 8, dans lequel un rapport d2/d1 d'un diamètre de grain moyen d1 de la poudre d'alliage d'aluminium-cuivre et d'un diamètre de grain moyen d2 de la poudre de cuivre électrolytique est fixé de 2 à 3.

10. Procédé de fabrication d'un palier fritté pour une pompe à carburant selon l'une quelconque des revendications 7 à 9, dans lequel la poudre de cuivre électrolytique comprend des poudres ayant différentes formes, et dans lequel un rapport W2/W1 d'une proportion W1 de la poudre de cuivre électrolytique ayant un rapport de dimension de 2 ou plus et d'une proportion W2 de la poudre de cuivre électrolytique ayant un rapport de dimension inférieur à 2 est fixé de 3 à 9.

11. Procédé de fabrication d'un palier fritté pour une pompe à carburant,

le palier fritté comprenant une matière première sous forme de poudre comprenant de 8,5 % en poids à 10 % en poids d'aluminium, de 0,1 % en poids à 0,6 % en poids de phosphore, et le reste comprenant du cuivre en tant que composant principal, et des impuretés inévitables,

le procédé utilisant une poudre d'alliage d'aluminium-cuivre et une poudre d'alliage de phosphore-cuivre en tant que matière première sous forme de poudre sans ajouter de poudre d'une substance simple à base de cuivre à la matière première sous forme de poudre,
le procédé comprenant au moins :

une étape de moulage consistant à mouler une préforme comprimée ayant un auxiliaire de frittage ajouté à la matière première sous forme de poudre ;
une étape de frittage consistant à obtenir, à partir de la préforme comprimée, un comprimé fritté ayant une structure d'un alliage d'aluminium-cuivre ; et
une étape de dimensionnement consistant à soumettre le comprimé fritté à une mise en forme dimensionnelle.

12. Procédé de fabrication d'un palier fritté pour une pompe à carburant selon la revendication 11, dans lequel la poudre d'alliage d'aluminium-cuivre servant de matière première sous forme de poudre comprend une poudre d'alliage d'aluminium (7 % en poids à 11 % en poids)-cuivre.

13. Procédé de fabrication d'un palier fritté pour une pompe à carburant selon la revendication 11, dans lequel un rapport phase $\gamma$/phase $\alpha$ dans la structure de l'alliage d'aluminium-cuivre fritté est fixé à 0 < phase $\gamma$/phase $\alpha \leq 0{,}10$.

Fig. 1

Fig. 2

Fig. 3a

Fig. 3b

Fig. 3c

Fig. 4

Fig. 5

Fig. 6

Fig. 7

Fig. 8

Fig. 9

```
┌─────────────────────────────────────────┐
│ RAW MATERIAL POWDER PREPARATION STEP     │─S1
└─────────────────────────────────────────┘
                    │
                    ▼
        ┌───────────────────────┐
        │     MOLDING STEP      │─S2
        └───────────────────────┘
                    │
                    ▼
        ┌───────────────────────┐
        │    SINTERING STEP     │─S3
        └───────────────────────┘
                    │
                    ▼
        ┌───────────────────────┐
        │     SIZING STEP       │─S4
        └───────────────────────┘
                    │
                    ▼
    ┌───────────────────────────────┐
    │    OIL IMPREGNATION STEP      │─S5
    └───────────────────────────────┘
```

Fig. 10

Fig. 11

Fig. 12a

Fig. 12b

Fig. 12c

Fig. 13

Fig. 14

REDUCTION IN PRESSURE

LUBRICANT

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4521871 B

- JP 2009007650 A